(19) **Europäisches Patentamt / European Patent Office / Office européen des brevets**

(11) **EP 4 219 568 A1**

(12) # EUROPEAN PATENT APPLICATION
published in accordance with Art. 153(4) EPC

(43) Date of publication:
**02.08.2023 Bulletin 2023/31**

(21) Application number: **21872494.6**

(22) Date of filing: **22.09.2021**

(51) International Patent Classification (IPC):
**C08F 6/06** $^{(2006.01)}$ **C08F 20/00** $^{(2006.01)}$
**C08F 20/06** $^{(2006.01)}$ **C08J 3/12** $^{(2006.01)}$

(52) Cooperative Patent Classification (CPC):
**B29B 9/12; B29B 7/007; B29B 7/46; B29B 7/726;
B29B 7/823; B29B 7/826; C08F 6/06; C08F 20/00;
C08F 20/06; C08J 3/12;** B29B 9/06

(86) International application number:
**PCT/JP2021/034800**

(87) International publication number:
**WO 2022/065365 (31.03.2022 Gazette 2022/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.09.2020 JP 2020161054**

(71) Applicant: **Nippon Shokubai Co., Ltd.
Osaka-shi, Osaka 541-0043 (JP)**

(72) Inventors:
• **YORINO, Tsuyoshi
Himeji-shi, Hyogo 671-1282 (JP)**
• **ARAKE, Tomoyuki
Himeji-shi, Hyogo 671-1282 (JP)**

• **HAYASHI, Hiroki
Himeji-shi, Hyogo 671-1282 (JP)**
• **WAKABAYASHI, Ryota
Himeji-shi, Hyogo 671-1282 (JP)**
• **INOUE, Masahumi
Himeji-shi, Hyogo 671-1282 (JP)**
• **KATAKURA, Naoki
Suita-shi, Osaka 564-0034 (JP)**
• **ADACHI, Yoshifumi
Himeji-shi, Hyogo 671-1282 (JP)**
• **MITSUKAMI, Yoshiro
Himeji-shi, Hyogo 671-1282 (JP)**
• **YAMAGUCHI, Tatsuya
Himeji-shi, Hyogo 671-1282 (JP)**

(74) Representative: **Taylor, Gail et al
Kilburn & Strode LLP
Lacon London
84 Theobalds Road
London WC1X 8NL (GB)**

(54) **METHOD FOR PRODUCING WATER-ABSORBING RESIN POWDER**

(57) [Problem] Provided is a method for producing a water-absorbing resin powder excellent in water absorption speed.

[Solution] The method for producing a water-absorbing resin powder according to the present invention includes a polymerization step of polymerizing an aqueous monomer solution to obtain a crosslinked hydrogel polymer, a gel-crushing step of crushing the crosslinked hydrogel polymer after the polymerization step using a gel-crushing device to obtain a crosslinked particulate hydrogel polymer, and a drying step of drying the crosslinked particulate hydrogel polymer to obtain a dried product, and in the method, the gel-crushing device includes an input port, a discharge port, and a main body incorporating a plurality of rotation axes each including a crusher, in the gel-crushing step, the crosslinked hydrogel polymer is continuously put into the gel-crushing device from the input port, the crosslinked hydrogel polymer is continuously crushed by the crusher at 50°C or higher, and the crosslinked particulate hydrogel polymer is continuously taken out from the discharge port, the crosslinked hydrogel polymer to be put into the input port has a rate of polymerization of 90 mass% or more, and the crosslinked particulate hydrogel polymer discharged from the discharge port has a mass average particle diameter d1 of 3 mm or less as converted to a solid content.

EP 4 219 568 A1

FIG.1

**Description**

**TECHNICAL FIELD**

The present invention relates to a method for producing a water-absorbing resin powder.

**BACKGROUND ART**

Water-absorbing resins (super absorbent polymers/SAPs) are a water swellable and water insoluble polymer gelling agent, and are widely used in, for example, absorbent articles such as disposable diapers and sanitary napkins, agricultural or horticultural humectants, and industrial water sealants in various fields.

Many monomers as raw materials and hydrophilic polymers are used for the water-absorbing resins, and polyacrylic acid (salt)-based water-absorbing resins used acrylic acid and/or its salt as a monomer are industrially produced in the largest amount from the viewpoint of water absorption performance.

The water-absorbing resins have been required to have various functions (enhanced physical properties) as disposable diapers, which are one of the main applications, have advanced in performance. Specifically, the water-absorbing resins are required to have, in addition to basic physical properties such as absorption capacity without pressure and absorption capacity under load, a variety of physical properties such as gel strength, a water soluble component, a moisture content, water absorption speed, liquid permeability, particle size distribution, urine resistance, an antibacterial property, damage resistance, powder fluidity, a deodorant property, coloring resistance, low dustiness, and low monomer residue. In applications for hygiene products such as disposable diapers, further improvement in water absorption speed is particularly desired as the products become thinner.

A typical commercial method for producing the powdery or particulate water-absorbing resin includes a polymerization step, a gel-crushing (grain refining) step performed after or simultaneously with polymerization, a drying step of a grain-refined gel, a pulverizing step of a dried product, a classification step of a pulverized product, a recycling step of a fine powder generated by pulverization and classification, and a surface crosslinking step of a water-absorbing resin powder after the classification.

The methods for producing a water-absorbing resin that have been proposed include a production method in which a polymerization step and a gel-crushing step are simultaneously performed using a polymerization apparatus having a crushing mechanism. In this production method, a polymerization reaction of a liquid monomer is progressed and at the same time, a hydrogel generated is crushed, and the grain-refined hydrogel is discharged from the polymerization apparatus. Specific examples of this production method include methods in which a batch kneader or a continuous kneader is used that are described in Patent Literature 1 to 3.

However, the size of gel particles obtained with these apparatuses is about several mm to several cm. In the recent situation where further improvement in water absorption speed is required, such gel-crushing is insufficient, and thus an additional gel-crushing device has been needed. Patent Literature 4 proposes a method in which a batch kneader or a continuous kneader is used for wet-crushing to a size smaller than the gel particle size corresponding to the product particle diameter of a water-absorbing resin, but this method is impractical because the apparatus size is excessively large.

Furthermore, in the polymerization step, a highly adhesive hydrogel is crushed with a monomer polymerizing, and thus the hydrogel is likely to adhere to the component inside the apparatus, and in addition, the hydrogel is fixed by the polymerization proceeding in the adhering state, so that component breakage is caused or time is required for cleaning in maintenance.

Citation List

Patent Literature

Patent Literature 1: JP 57-34101 A
Patent Literature 2: JP 60-55002 A
Patent Literature 3: WO 2001/038402 A
Patent Literature 4: JP H05-112654 A

**SUMMARY OF INVENTION**

In order to obtain a water-absorbing resin excellent in water absorption speed, which is particularly required recently, a hydrogel needs to be crushed in a gel-crushing step to a particle diameter smaller than that in the related art, but a hydrogel having a desired particle diameter cannot be obtained by so-called kneader polymerization in which the conventional polymerization step and gel-crushing step are simultaneously performed using a kneader having a plurality of axes.

Therefore, an object of the present invention is to provide a water-absorbing resin excellent in water absorption speed.

In the related art, to obtain a crosslinked hydrogel polymer, a crosslinked particulate hydrogel polymer (hereinafter, also referred to as "particulate hydrogel") is obtained by using an extruder (meat chopper) provided with a porous plate. The present inventors have first found that a particulate hydrogel can be continuously obtained by gel-crushing using a multiaxial kneader (particularly, a biaxial kneader). Furthermore, the present inventors have found that a water-absorbing resin powder excellent in water absorption speed can be obtained by continuously crushing a crosslinked hydrogel polymer at 50°C or higher in this crushing means, and have completed the present invention.

That is, the present invention is a method, for producing a water-absorbing resin powder, including a polymerization step of polymerizing an aqueous monomer solution to obtain a crosslinked hydrogel polymer, a gel-crushing step of crushing the crosslinked hydrogel polymer after the polymerization step using a gel-crushing device to obtain a crosslinked particulate hydrogel polymer, and a drying step of drying the crosslinked particulate hydrogel polymer to obtain a dried product, wherein the gel-crushing device includes an input port, a discharge port, and a main body incorporating a plurality of rotation axes each including a crusher, in the gel-crushing step, the crosslinked hydrogel polymer is continuously put into the gel-crushing device from the input port, the crosslinked hydrogel polymer is continuously crushed by the crusher at 50°C or higher, and the crosslinked particulate hydrogel polymer is continuously taken out from the discharge port, the crosslinked hydrogel polymer to be put into the input port has a rate of polymerization of 90 mass% or more, and the crosslinked particulate hydrogel polymer discharged from the discharge port has a mass average particle diameter d1 of 3 mm or less as converted to a solid content.

## BRIEF DESCRIPTION OF DRAWINGS

Fig. 1 is a partially cutaway side view illustrating an example of a gel-crushing device used in a production method according to an embodiment of the present invention.

Fig. 2 is an enlarged view of the gel-crushing device in Fig. 1 (a view of the central part of the main body as viewed from above).

Fig. 3 is a flowchart to explain a typical process of producing a water-absorbing resin.

## DESCRIPTION OF EMBODIMENTS

Hereinafter, the present invention will be described in detail, but the scope of the present invention is not limited to these descriptions, and can be appropriately changed from the following examples and implemented as long as the gist of the present invention is not impaired. The present invention is not limited to the following embodiments, and can be variously modified within the scope indicated in the claims. The present invention also encompasses, in its technical scope, other embodiments obtained by appropriately combining the technical means disclosed in the following embodiments.

[1] Definitions of terms

[1-1] "Water-absorbing resin"

The term "water-absorbing resin" in the present invention refers to a water swellable and water insoluble polymer gelling agent that satisfies the following physical properties. That is, the term "water-absorbing resin" refers to a polymer gelling agent having a centrifuge retention capacity (CRC), which is specified in ERT 441.2-02 as a water swellable property index, of 5 g/g or more and having a water soluble component (Ext), which is specified in ERT 470.2-02 as a water insoluble property index, of 50 mass% or less.

The water-absorbing resin can be designed according to its use and the purpose, and is not particularly limited. However, the water-absorbing resin is preferably a hydrophilic crosslinked polymer obtained by crosslinking and polymerizing unsaturated monomers having a carboxyl group. Moreover, the water-absorbing resin is not limited to an embodiment in which the entire water-absorbing resin is a crosslinked polymer, and can be a composition containing an additive or the like as long as the above-described physical properties (CRC and Ext) satisfy the value ranges described above.

The water-absorbing resin in the present invention may be subjected to surface crosslinking (in other words, post-crosslinking or secondary crosslinking) or may be not subjected to surface crosslinking. In the present description, the term "water-absorbing resin powder" refers to a powdery water-absorbing resin, and the powdery water-absorbing resin is preferably adjusted to a predetermined solid content (moisture content) and a predetermined particle size (particle diameter). A water-absorbing resin powder that has been subjected to a predetermined surface crosslinking treatment may be separately referred to as a surface-crosslinked (post-crosslinked) water-absorbing resin powder or a water-absorbing agent.

[1-2] "Poly(meth)acrylic acid (salt)"

The term "poly (meth) acrylic acid (salt)" in the present invention refers to poly(meth)acrylic acid and/or its salt, and means a crosslinked polymer containing a repeating unit of (meth)acrylic acid and/or its salt (hereinafter, also referred to as "(meth)acrylic acid (salt)") as a main component, and containing a graft component as an optional component.

The term "main component" means that the amount of the (meth) acrylic acid (salt) used (contained) is preferably 50 mol% to 100 mol%, more preferably 70 mol% to 100 mol%, still more preferably 90 mol% to 100 mol%, and particularly preferably substantially 100 mol%, with respect to the total amount of monomers (excluding a crosslinking agent) used for polymerization.

Here, the poly (meth) acrylic acid salt may be unneutralized, but is preferably partially neutralized or completely neutralized, and is more preferably a monovalent salt, still more preferably an alkali metal salt or ammonium salt, still even more preferably an alkali metal salt, and particularly preferably a sodium salt.

[1-3] Definitions of evaluation methods

"EDANA" is an abbreviation for European Disposables and Nonwovens Associations. "ERT" is an abbreviation for EDANA Recommended Test Methods, and is a European standard that specifies a method for evaluating a water-absorbing resin. In the present invention, unless otherwise specified, measurement is performed in accordance with the measurement methods described in the original ERT (revised in 2002). In the case of a measurement method not described in the original ERT, measurement is performed in accordance with the method under the condition described in Examples.

[1-3-1] "CRC" (ERT 441.2-02)

"CRC" is an abbreviation for "centrifuge retention capacity", and means a fluid retention capacity without pressure (also referred to also as "fluid retention capacity") of a water-absorbing resin. Specifically, the term "CRC" refers to a fluid retention capacity (unit: g/g) measured after a procedure in which 0.2 g of a water-absorbing resin is put into a nonwoven fabric bag, then immersed in a large excess of a 0.9 mass% aqueous sodium chloride solution for 30 minutes so as to be allowed to freely swell, and then drained in a centrifuge (250 G) for 3 minutes. For a hydrogel after polymerization and/or after gel-crushing, the hydrogel is used in an amount of 0.4 g, the measurement time is changed to 24 hours, and solid content correction is carried out, and thus CRC is determined.

[1-3-2] "Moisture Content" (ERT 430.2-02)

The term "moisture content" means the moisture content specified with the amount lost from drying a water-absorbing resin. Specifically, the term "moisture content" refers to a value (unit: mass%) calculated from the amount lost from drying 4.0 g of a water-absorbing resin at 105°C for 3 hours. In the present invention, a water-absorbing resin after drying is specified with the amount lost from drying 1.0 g of a water-absorbing resin at 180°C for 3 hours, and a hydrogel before drying is calculated from the amount lost from drying 2.0 g of a hydrogel at 180°C for 24 hours.

[1-3-3] "PSD" (ERT 420.2-02)

"PSD" is an abbreviation for "particle size distribution", and means particle size distribution of a water-absorbing resin measured by sieve classification. The mass average particle diameter (D50) and the logarithmic standard deviation ($\sigma\zeta$) of particle size distribution are measured with the same method as that described in U.S. Patent No. 7638570. In the present invention, the particle size distribution (PSD) of a particulate hydrogel is specified with the method of wet sieve classification described below. The particle diameter (um) of a particulate hydrogel converted to a solid content is specified from the particle diameter (um) and the solid content (mass%) of the particulate hydrogel with the calculation method described below.

[1-3-4] "AAP" (ERT 442.2-02)

"AAP" is an abbreviation for "absorption against pressure", and means a fluid retention capacity under pressure of a water-absorbing resin. Specifically, the term "AAP" refers to a fluid retention capacity (unit: g/g) measured after 0.9 g of a water-absorbing resin is swollen in a large excess of a 0.9 mass% aqueous sodium chloride solution for 1 hour under a load of 2.06 kPa (21 g/cm$^2$, 0.3 psi). In the present description, AAP is defined as a value measured when the load condition is changed to 4.83 kPa (about 49 g/cm$^2$, equivalent to about 0.7 psi).

[1-3-5] "Vortex"

The term "vortex" in the present description refers to an index indicating the water absorption speed of a water-absorbing resin, and means a time (unit: second) required for 2 g of a water-absorbing resin to absorb 50 ml of a 0.9 mass% aqueous sodium chloride solution to a predetermined state.

[1-4] "Gel-crushing"

The term "gel-crushing" in the present description means an operation of reducing the size of a crosslinked hydrogel polymer (hereinafter, also simply referred to as "hydrogel") obtained in a polymerization step (step of, preferably, aqueous solution polymerization or unstirred aqueous solution polymerization (static aqueous solution polymerization), and particularly preferably belt polymerization) to increase the surface area of the crosslinked hydrogel polymer by applying shear and compressive force in order to facilitate drying of the crosslinked hydrogel polymer.

Note that the form of a hydrogel obtained may differ depending on the type of the polymerizer. For example, a form of a hydrogel obtained by static polymerization (particularly belt polymerization) has a sheet form or block form. Here, a polymer having a sheet form is planar and has a thickness, and the thickness is preferably 1 mm to 30 cm, and particularly preferably 0.5 to 10 cm. A sheet-formed hydrogel is typically obtained by belt polymerization, drum polymerization, or batch thin film polymerization. The length and the width of a sheet-formed hydrogel are appropriately determined according to the size of the polymerization apparatus to be used. In the case of continuous polymerization (continuous belt polymerization or continuous drum polymerization), a sheet-formed hydrogel having an endless length is obtained. The width of the sheet-formed hydrogel is the width of the belt or drum of the polymerization apparatus, and is preferably 0.1 to 10 m, and more preferably 1 to 5 m. The endless sheet-formed hydrogel may be appropriately cut in the length direction after polymerization and used. A block-formed hydrogel is obtained by tank polymerization or the like. This block-formed hydrogel may be crushed into a several cm to several m-square size as appropriate after polymerization. In the case of kneader polymerization, polymerization and gel-crushing are continuously performed in the same apparatus in the polymerization step, and thus a hydrogel is obtained that is grain-refined to some extent. However, hydrogel particles obtained by kneader polymerization are not grain-refined to the level of a particle diameter obtained with the production method according to the present invention. Furthermore, it needs an excessive apparatus for crushing hydrogel to the level of a particle diameter obtained in the present invention by the kneader used in keader polymerization, and thus such crushing is impractical as an industrial production method. Therefore, gel-crushing in such a polymerization step is not included in the concept of "gel-crushing" in the present invention. In the present invention, it is assumed that a polymerization step is completed when the rate of polymerization reaches the range described below. An operation of crushing a hydrogel grain-refined to some extent with a method such as kneader polymerization to the level of a particle diameter required in the present invention is included in the concept of "gel-crushing" in the present invention.

[1-5] Others

In the present description, the phrase "X to Y" indicating a range means "X or more and Y or less". Unless otherwise specified, the term "ton (t)", which is a unit of mass, means "metric ton", and the term "ppm" means "ppm by mass" or "ppm by weight". Moreover, the terms "mass" and "weight", "parts by mass" and "parts by weight", and "mass%" and "wt%" are treated as synonyms for each other. Furthermore, the term "··· acid (salt)" means "··· acid and/or its salt", and the term "(meth)acrylic" means "acrylic and/or methacrylic".

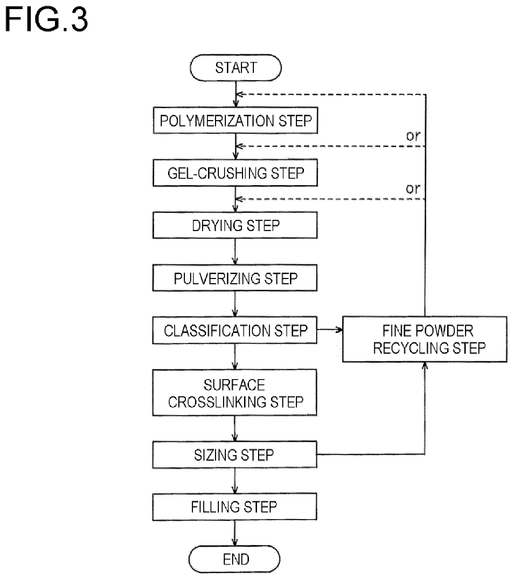

[2] Method for producing water-absorbing resin powder The method for producing a water-absorbing resin powder according to the present invention includes a polymerization step, and in addition to the polymerization step, a gel-crushing step and a drying step. The production method preferably further includes a cooling step, a pulverizing step of a dried product, a classification step, a surface crosslinking step, and a sizing step after surface crosslinking (see Fig. 3). In addition, the production method may include a step of preparing an aqueous monomer solution, a step of adding various additives, a fine powder removing step and a fine powder recycle step (fine powder recycling step), and a filling step. The production method can further include various known steps according to the purpose.

According to the production method of the present invention, an absorbent resin excellent in water absorption speed is obtained by gel-crushing a crosslinked hydrogel polymer having a rate of polymerization of 90 mass% or more using a multiaxial kneader (particularly, a biaxial kneader) and subjecting a particulate hydrogel having a mass average particle diameter d1 of 3 mm or less as converted to a solid content to a drying step.

Hereinafter, each step will be described in detail.

[2-1] Step of preparing aqueous monomer solution

This is an optional step of preparing an aqueous solution preferably containing an acid group-containing unsaturated monomer as a main component (hereinafter, referred to as "aqueous monomer solution"). A slurry solution of a monomer can be also used as long as the water absorption performance of the obtained water-absorbing resin does not deteriorate, but in this section, an aqueous monomer solution will be described for convenience.

Here, the term "main component" means that the amount of the acid group-containing unsaturated monomer used (contained) is usually 50 mol% or more, preferably 70 mol% or more, and more preferably 90 mol% or more (with an upper limit of 100 mol%), with respect to the total amount of monomers (excluding an internal crosslinking agent) subjected to a polymerization reaction of a water-absorbing resin.

(Acid group-containing unsaturated monomer)

The acid group specified in the present invention is not particularly limited, and examples of the acid group include a carboxyl group, a sulfone group, and a phosphate group. Examples of the acid group-containing unsaturated monomer include (meth)acrylic acid, (anhydride) maleic acid, itaconic acid, cinnamic acid, vinylsulfonic acid, allyltoluenesulfonic acid, vinyl toluene sulfonic acid, styrene sulfonic acid, 2-(meth)acrylamide-2-methylpropanesulfonic acid, 2-(meth)acryloylethanesulfonic acid, 2-(meth)acryloylpropanesulfonic acid, and 2-hydroxyethyl(meth)acryloyl phosphate. From the viewpoint of water absorption performance, (meth)acrylic acid, (anhydrous) maleic acid, itaconic acid, and cinnamic acid are preferable, (meth)acrylic acid is more preferable, and acrylic acid is particularly preferable.

(Monomer other than acid group-containing unsaturated monomer)

The monomer other than the acid group-containing unsaturated monomer may be any compound that can be polymerized into a water-absorbing resin. Examples of such a monomer include amide group-containing unsaturated monomers such as (meth)acrylamide, N-ethyl (meth)acrylamide, and N,N-dimethyl (meth)acrylamide; amino group-containing unsaturated monomers such as N,N-dimethylaminoethyl (meth)acrylate, N,N-dimethylaminopropyl (meth)acrylate, and N,N-dimethylaminopropyl (meth)acrylamide; mercapto group-containing unsaturated monomers; phenolic hydroxyl group-containing unsaturated monomers; and lactam group-containing unsaturated monomers such as N-vinylpyrrolidone.

(Neutralized salt)

In the present invention, a neutralized salt can be used that is obtained by neutralizing some or all of the acid groups included in the acid group-containing unsaturated monomer. In this case, the salt of the acid group-containing unsaturated monomer is preferably a salt with a monovalent cation, more preferably at least one selected from an alkali metal salt, an ammonium salt, and an amine salt, still more preferably an alkali metal salt, still even more preferably at least one selected from a sodium salt, a lithium salt, and a potassium salt, and particularly preferably a sodium salt.

(Basic substance)

The neutralizing agent used to neutralize the acid group-containing unsaturated monomer is not particularly limited, and an inorganic salt such as sodium hydroxide, potassium hydroxide, sodium carbonate, or ammonium carbonate, or a basic substance such as an amine-based organic compound having an amino group or an imino group is appropriately selected and used. As the neutralizing agent, two or more basic substances may be used in combination. The term "monomer" in the present invention represents a concept including a neutralized salt unless otherwise specified.

(Rate of neutralization)

The number of moles of the neutralized salt with respect to the total number of moles of the acid group-containing unsaturated monomer and its neutralized salt (hereinafter, referred to as "rate of neutralization") is preferably 40 mol% or more, more preferably 40 mol% to 80 mol%, still more preferably 45 mol% to 78 mol%, and particularly preferably 50 mol% to 75 mol%, from the viewpoint of water absorption performance.

Examples of the method for adjusting the rate of neutralization include a method of mixing an acid group-containing unsaturated monomer and its neutralized salt, a method of adding known neutralizing agent to an acid group-containing unsaturated monomer, and a method of using partially neutralized salt of an acid group-containing unsaturated monomer adjusted to a predetermined rate of neutralization in advance (that is, a mixture of an acid group-containing unsaturated monomer and its neutralized salt). These methods may be combined.

The rate of neutralization may be adjusted before the start of the polymerization reaction of the acid group-containing unsaturated monomer or during the polymerization reaction of the acid group-containing unsaturated monomer, or the rate of neutralization may be adjusted in the crosslinked hydrogel polymer obtained after the completion of the polymerization reaction of the acid group-containing unsaturated monomer. The rate of neutralization may be adjusted in any one stage selected from the stage before the start of the polymerization reaction, the stage during the polymerization reaction, and the stage after the completion of the polymerization reaction, or may be adjusted in a plurality of stages. In use for absorbent articles and the like, such as disposable diapers, that may directly contact with the human body, the rate of neutralization is to be adjusted preferably before the start of the polymerization reaction and/or during the polymerization reaction, and more preferably before the start of the polymerization reaction.

(Internal crosslinking agent)

In the method for producing a water-absorbing resin powder, an internal crosslinking agent is preferably used. The water absorption performance, the gel strength after water absorption, and the like of the water-absorbing resin obtained are adjusted with the internal crosslinking agent.

The internal crosslinking agent is to have two or more unsaturated bonds or reactive functional groups in total in one molecule. Examples of the internal crosslinking agent having a plurality of polymerizable unsaturated groups (copolymerizable with a monomer) in the molecule include N,N-methylenebis(meth)acrylamide, (poly)ethylene glycol di(meth)acrylate, (poly)propylene glycol di(meth)acrylate, trimethylolpropane tri(meth)acrylate, glycerin (meth)acrylate, glycerin acrylate methacrylate, ethylene oxide-modified trimethylolpropane tri(meth)acrylate, pentaerythritol hexa(meth)acrylate, triallyl cyanurate, triallyl isocyanurate, and triallyl phosphate. Examples of the internal crosslinking agent having a plurality of reactive functional groups (capable of reacting with a functional group of a monomer (for example, a carboxy group)) in the molecule include triallylamine, polyallyloxyalkanes, (poly)ethylene glycol diglycidyl ether, glycerol diglycidyl ether, ethylene glycol, polyethylene glycol, propylene glycol, glycerin, 1,4-butanediol, pentaerythritol, ethylenediamine, ethylene carbonate, propylene carbonate, and polyethyleneimine (here, the cyclic carbonates such as ethylene carbonate are a crosslinking agent that reacts with a carboxyl group to further generate a functional group OH). Examples of the internal crosslinking agent having a polymerizable unsaturated group and a reactive functional group in the molecule include glycidyl (meth)acrylate. Two or more of these may be used in combination.

Among these internal crosslinking agents, compounds having a plurality of polymerizable unsaturated groups in the molecule are preferable, compounds having a (poly)alkylene structural unit in the molecule are more preferable, compounds having a polyethylene glycol structural unit are still more preferable, and acrylate compounds having a polyethylene glycol structural unit are particularly preferable, from the viewpoint of an effect of the present invention. Hydrogels obtained using these internal crosslinking agents have low adhesiveness. These hydrogels are preferable because fusion and aggregation during drying can be reduced by these hydrogels having low adhesiveness.

The amount of the internal crosslinking agent used is appropriately set according to, for example, the kinds of the monomer and the internal crosslinking agent. From the viewpoint of the gel strength of the resulting water-absorbing resin, the amount is preferably 0.001 mol% or more, more preferably 0.005 mol% or more, and still more preferably 0.01 mol% or more, with respect to the monomer amount. The amount is preferably 5 mol% or less and more preferably 2 mol% or less, from the viewpoint of improving the water absorption performance of the water-absorbing resin. The internal crosslinking agent may be not used under a polymerization condition of an effective self-crosslinking reaction of the monomer.

(Polymerization inhibitor)

The monomer used for polymerization preferably contains a small amount of polymerization inhibitor from the viewpoint of polymerization stability. A preferred polymerization inhibitor is p-methoxyphenol. The amount of the polymerization inhibitor contained in the monomer (particularly, acrylic acid and its salt) is usually 1 ppm to 250 ppm, preferably 10 ppm to 160 ppm, and more preferably 20 ppm to 80 ppm.

(Other substances)

In the production method according to the present invention, substances exemplified below (hereinafter, referred to as "other substances") can also be added to the aqueous monomer solution as long as an object of the present invention is achieved.

Specific examples of other substances include chain transfer agents such as thiols, thiolates, secondary alcohols, amines, and hypophosphites, foaming agents such as carbonates, bicarbonates, azo compounds, and bubbles, chelating agents such as ethylenediaminetetra(methylenephosphinic acid) and its metal salts, ethylenediaminetetraacetic acid and its metal salts, and diethylenetriaminepentaacetic acid and its metal salts, and hydrophilic polymers such as polyacrylic acid (salts) and crosslinked polymers thereof (such as water-absorbing resin fine powder to be recycled), starch, cellulose, starch-cellulose derivatives, and polyvinyl alcohol. Other substances may be used singly or in combination of two or more kinds thereof.

The amount of other substances used is not particularly limited. However, the amount of a fine powder to be recycled is 30 mass% or less with respect to the monomer amount, and the total concentration of other substances other than a fine powder is preferably 10 mass% or less, more preferably 0.001 mass% to 5 mass%, and particularly preferably 0.01 mass% to 1 mass%, with respect to the monomer amount.

(Monomer concentration in monomer composition)

In the present step, the monomer concentration in the monomer composition (= total monomer amount/(total monomer amount + total amount of polymerization solvent (usually being water)) is preferably 10 mass% to 90 mass%, more preferably 20 mass% to 80 mass%, still more preferably 30 mass% to 70 mass%, and particularly preferably 40 mass% to 60 mass% from the viewpoint of the physical properties and the productivity of the water-absorbing resin. Hereinafter, the monomer concentration may be referred to as "concentration of monomers".

(Polymerization initiator)

The polymerization initiator used in the present invention is appropriately selected according to the form of polymerization and the like, and thus is not particularly limited. Examples of the polymerization initiator include thermal decomposition polymerization initiators, photolytic polymerization initiators, combination thereof, and redox polymerization initiators to be used in combination with a reducing agent that promotes decomposition of a polymerization initiator. Specifically, one or more of the polymerization initiators disclosed in U.S. Patent No. 7265190 are used. Note that a peroxide or an azo compound is preferably used, a peroxide is more preferably used, and a persulfate is still more preferably used, from the viewpoint of the handleability of the polymerization initiator and the physical properties of the water-absorbing resin.

The amount of the polymerization initiator used is preferably 0.001 mol% to 1 mol% and more preferably 0.001 mol% to 0.5 mol%, with respect to the monomer amount. In a case where redox polymerization is performed as necessary, the amount of the reducing agent used in combination with the oxidizer is preferably 0.0001 mol% to 0.02 mol% with respect to the monomer amount.

(Amount of dissolved oxygen)

The dissolved oxygen in the aqueous monomer solution before polymerization may be reduced by increasing the temperature or replacing with an inert gas. For example, the dissolved oxygen is reduced to preferably 5 ppm or less, more preferably 3 ppm or less, and particularly preferably 1 ppm or less.

Bubbles (particularly, the above-described inert gas or the like) can be dispersed in the aqueous monomer solution. In this case, foaming polymerization occurs in the polymerization reaction.

[2-2] Polymerization step

This is a step of polymerizing the aqueous monomer solution to obtain a crosslinked hydrogel polymer. This is preferably a step to obtain a crosslinked hydrogel polymer containing poly(meth)acrylic acid (salt) as a main component.

In addition to the above-described method by adding a polymerization initiator to perform a polymerization reaction, a method is available by irradiation with an active energy ray such as a radiation, an electron beam, or an ultraviolet ray. Furthermore, addition of a polymerization initiator and irradiation with an active energy ray may be used in combination.

(Form of polymerization)

Regarding the form of polymerization, the polymerization is batch or continuous aqueous solution polymerization. The polymerization may be belt polymerization or kneader polymerization. Continuous aqueous solution polymerization is more preferable, and both continuous belt polymerization and continuous kneader polymerization are applicable.

Regarding specific forms of polymerization, U.S. Patent No. 4893999, U.S. Patent No. 6241928, US 2005/215734 A, and the like disclose continuous belt polymerization, and U.S. Patent No. 6987151, U.S. Patent No. 6710141, and the like disclose continuous kneader polymerization. Using the continuous aqueous solution polymerization described above improves the production efficiency of a water-absorbing resin.

Examples of a preferable form of the continuous aqueous solution polymerization include forms of "high temperature initiation polymerization" and "high concentration polymerization". The term "high temperature initiation polymerization" refers to a form in which polymerization is initiated at a temperature of an aqueous monomer solution of preferably 30°C or higher, more preferably 35°C or higher, still more preferably 40°C or higher, and particularly preferably 50°C or higher (with an upper limit of the boiling point), and the term "high concentration polymerization" refers to a form in which polymerization is performed at a monomer concentration of preferably 30 mass% or more, more preferably 35 mass% or more, still more preferably 40 mass% or more, and particularly preferably 45 mass% or more (with an upper limit of the saturated concentration). These forms of polymerization can also be used in combination.

(Rate of polymerization of hydrogel)

The rate of polymerization of the crosslinked hydrogel polymer obtained in the polymerization step is 90 mass% or more. The rate of polymerization is preferably 95 mass% or more, more preferably 98 mass% or more, and particularly preferably 99 mass% or more. In the case of crushing the gel in a state of a low rate of polymerization (that is, a state of a rate of polymerization of less than 90 mass%) (in a case where polymerization and gel-crushing are simultaneously performed as in, for example, kneader polymerization), a large amount of unreacted monomers included in the crushed gel particles polymerize to bond the crushed gel particles together, and thus gel particles having a large particle diameter are generated again. Therefore, in the case of crushing the gel during the polymerization step, the regenerated gel particles having a large particle diameter are to be crushed again, leading to a problem that the energy required for crushing increases and the polymerization apparatus becomes excessively large. In a case where, after the polymerization step, a hydrogel having a low rate of polymerization is crushed and the crushed hydrogel containing a large amount of unreacted monomers is subjected to the drying step, a polymerization reaction proceeds during drying to regenerate hydrogel particles having a large particle diameter from gel particles having a small particle diameter, leading to problems such as a decrease in the water absorption speed of the resulting water-absorbing resin and an increase in the particle diameter of the dried product. The upper limit of the rate of polymerization is not particularly limited, and is ideally 100 mass%. However, a high rate of polymerization requires a long polymerization time and strict polymerization conditions that may lead to deterioration of the productivity and the physical properties. Therefore, the upper limit may be 99.95 mass% or 99.9 mass%, and usually an upper limit of about 99.8 mass% is sufficient. Typically, the rate of polymerization of the crosslinked hydrogel polymer obtained in the polymerization step is 98 to 99.99 mass%.

[2-3] Chopping step

The chopping step is an optional step of cutting or roughly crushing the crosslinked hydrogel polymer into a size such that the resulting polymer can be put into the gel-crushing device after the polymerization step and before the gel-crushing step. The chopping step is preferably performed particularly in a case where belt polymerization is performed in the polymerization step to obtain a sheet-formed or block-formed hydrogel. Therefore, in one embodiment of the present invention, the crosslinked hydrogel polymer obtained after the polymerization step has a sheet form, and a chopping step of chopping the sheet-formed crosslinked hydrogel polymer before the gel-crushing step is further included. The means for cutting or roughly crushing the hydrogel in the chopping step is not particularly limited, and a rotary cutter, a roller cutter, a guillotine cutter, or the like is used. The size into which the crosslinked hydrogel polymer is chopped is not particularly limited as long as the chopped hydrogel can be put into the gel-crushing device described below, but the size of the chopped hydrogel is preferably 1 mm to 3 m, more preferably 5 mm to 2.5 m, and particularly preferably 1 cm to 2 m. The chopping step may be not performed as long as an object of the present invention is achieved.

[2-4] Gel-crushing step

This is a step of, after the polymerization, crushing and grain-refining the crosslinked hydrogel polymer obtained in the polymerization step to obtain a crosslinked particulate hydrogel polymer (hereinafter, referred to as "particulate hydrogel"). The particle diameter of the particulate hydrogel is adjusted to the preferable range described below so as to obtain a (surface-crosslinked) water-absorbing resin powder having an intended form and intended performance in a high yield. In order to obtain a particulate hydrogel having a predetermined particle diameter, this step may be performed twice or more.

(Gel-crusher)

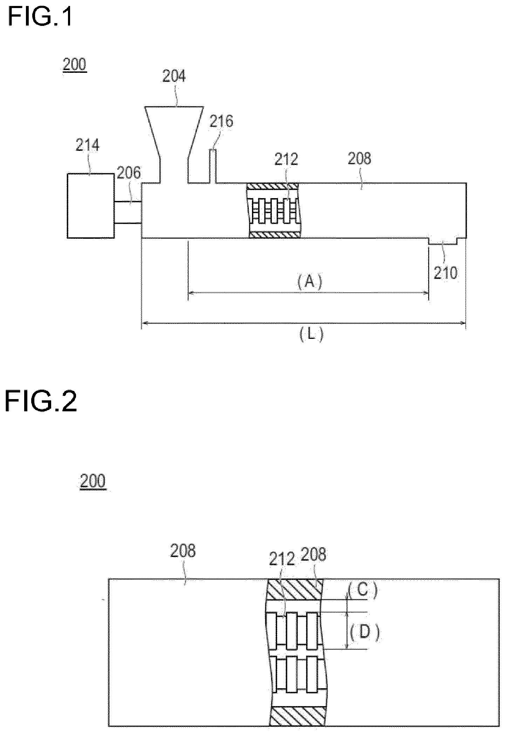

In the production method according to the present invention, in the gel-crushing step after the polymerization step, a gel-crushing device is used that has an input port, a main body incorporating a plurality of rotation axes, and a discharge port as illustrated in Figs. 1 and 2. Each rotation axis includes a crusher. In this gel-crushing device, the crosslinked hydrogel polymer continuously put into the main body from the input port is crushed by the crusher incorporated in the rotation axes at 50°C or higher, and the resulting crosslinked particulate hydrogel polymer is continuously taken out from the discharge port. In the present invention, the term "main body" means a body portion (reference sign 208 in Fig. 1) in which a plurality of rotation axes and crusher are placed, which is also referred to as a barrel, a trough, a casing, or the like.

The gel-crushing device used in the production method according to the present invention may be set vertically (so that the hydrogel moves in the vertical direction), or may be set laterally or horizontally (so that the hydrogel moves in the lateral direction or the horizontal direction) as long as gel-crushing is continuous. The vertical gel-crushing device and the horizontal gel-crushing device may be inclined at 0° to 90° with respect to the horizontal direction. For example, the horizontal continuous crusher illustrated in Fig. 1 is appropriately inclined as necessary, and the inclination may be downward or upward from the input port to the discharge port (that is, with respect to the moving direction of the hydrogel). The inclination angle is usually 0° to 10°, preferably 0° to 1°, and particularly preferably 0°.

In an extruder (meat chopper) used for gel-crushing in conventional production methods, a hydrogel is substantially crushed in the vicinity of a die placed in an extrusion port, and almost no gel-crushing is performed in a screw portion serving to convey the hydrogel. Meanwhile, the gel-crushing device (in particular, kneader) used in the production method according to the present invention is characterized in that the hydrogel put into the gel-crushing device continues to be crushed to a particle diameter of 3 mm or less by the crusher included in the rotation axes before reaching the discharge port.

Specifically, in the gel-crushing device, the hydrogel put from the input port is crushed to an intended particle size before being discharged from the discharge port. Therefore, in the gel-crushing device, extrusion from a die is not essential unlike in a conventional extruder (meat chopper), and a particulate hydrogel adjusted to an intended particle size is taken out from the discharge port. In the production method according to the present invention, a water-absorbing resin excellent in water absorption speed is obtained by using the gel-crushing device.

The gel-crushing device preferably includes a heating means and/or a heat-retaining means from the viewpoint of continuously performing gel-crushing at 50°C or higher. The heating means and/or the heat-retaining means is not particularly limited, but from the viewpoint of preventing adhesion and aggregation of the hydrogel and the particulate hydrogel, a heating means is preferable that uses direct heat transfer by convection heat transfer and/or indirect heat transfer by heat conduction from a heating surface (contact surface with the hydrogel, heat source portion) of the gel-crushing device heated with a heat medium. More preferable heating means include ventilation heating by direct heat transfer and outer wall heating by indirect heat transfer.

The heating means and/or the heat-retaining means, and more preferably the heating means is preferably provided on the outer surface of the main body, from the viewpoint of reducing damage to the hydrogel. Examples of the heat-retaining means include a means in which a part or the whole of the outer surface of the main body (preferably 50% or more, more preferably 800 or more, and particularly preferably the whole of the outer surface (area) of the main body) is covered with a heat insulating material. Examples of the heating means include an electric trace, a steam trace, and a jacket heated with a heat medium that are placed so as to cover a part or the whole of the outer surface of the main body (preferably 50% or more, more preferably 800 or more, and particularly preferably the whole of the outer surface (area) of the main body). The particle diameter of the particulate hydrogel required in the present invention is considerably smaller than that in the related art. Therefore, it has been found that the fluctuation in the adhesive property and the fluidity of the hydrogel particles due to the temperature change are greater than those assumed in the conventional technique. As a result, studies in the present invention have revealed that the energy required for crushing the hydrogel and the cohesiveness between the crushed gel particles greatly depend on the temperature. If the gel-crushing device includes the heating means and/or the heat-retaining means, the gel-crushing step can be performed in a further preferable temperature range. Furthermore, the quality of gel-crushing can be prevented from deterioration caused by the influence of a temperature difference between seasons or between day and night. In addition, the gel-crushing device can be smoothly brought to a stable operation even at the time of start-up.

The kind of the crusher included in each rotation axis is not particularly limited as long as an effect of the present invention can be obtained. Examples of the crusher having a shearing action on the hydrogel include disks having various shapes. Disks are referred to as a chip, a paddle, an element, a kneading, a rotor, or the like in some cases. The shape of the disk is not particularly limited, and is appropriately selected from circular plate shapes, elliptical shapes, substantially triangular shapes, and the like. Disks having different shapes can also be used in combination, and the arrangement thereof is appropriately adjusted from the viewpoint of the intended particle diameter of the particulate hydrogel and the energy required for crushing. In addition, an arm, a vane, a blade, a cut disk (CD), or the like may be used in combination as a crusher.

For example, in a case where each rotation axis includes a disk having a circular plate shape or an elliptical shape as a crusher, the ratio of the effective length inside the main body, L (Length) to the maximum diameter of the disk, D (Diameter: in the case of using a plurality of disks having different diameters, the diameter of the largest disk) is defined as L/D. The value of L/D is preferably 5 to 40, more preferably 6 to 30, and still more preferably 6.5 to 20. The effective length L means the length (entire length) of the main body (barrel) portion in the axial direction from the input port to the discharge port, as illustrated in Fig. 1.

The distance (clearance) between the disk and the main body (barrel) may depend on the location. When the minimum clearance C is defined as the shortest distance between the outer periphery of the disk and the inner wall of the main body (barrel), the minimum clearance C is preferably 200 or less, more preferably 150 or less, still more preferably 100 or less, and particularly preferably 5% or less of the maximum diameter of the disk, D. If the minimum clearance C is the above-described upper limit or less, the shearing force between the barrel and the disk is strong during gel-crushing, resulting in favorable gel-crushing efficiency. The minimum clearance C is preferably 0.20 or more, more preferably 0.50 or more, and still more preferably 1% or more of the maximum diameter of the disk, D. If the minimum clearance C is the above-described lower limit or more, contact between the disk and the inner wall of the main body (barrel) is suppressed, resulting in suppression of contamination with a metal foreign substance due to wear. In a preferred embodiment of the present invention, the minimum clearance C is 0.2 to 200 of the maximum diameter of the disk, D.

As described below, in the gel-crushing device, the hydrogel is crushed to a predetermined particle size by rotation of a plurality of rotation axes including a crusher. The rotation speeds of the plurality of rotation axes may be constant or not constant, and is appropriately set according to the apparatus. The rotation speed is preferably in the range of 1 rpm to 1000 rpm, more preferably 3 rpm to 500 rpm, and still more preferably 5 rpm to 300 rpm. In a case where the rotation axes have different rotation speeds, the ratio of the rotation speed of one rotation axis to the rotation speed of the other rotation axis is usually in the range of 1 to 10, and preferably in the range of 1 to 2.

In a case where the plurality of rotation axes include a disk as a crusher, the peripheral speed (V) of the disk defined by the following (Formula 3) may be constant or not constant, and is appropriately set according to the apparatus. The peripheral speed is preferably 0.05 m/s to 5 m/s, more preferably 0.1 m/s to 5 m/s, still more preferably 0.15 m/s to 3 m/s, and particularly preferably 0.2 m/s to 2 m/s. The peripheral speed higher than the above range makes the shearing force applied to the hydrogel excessive and causes deterioration of the physical properties and excessive compaction in the hydrogel particles after crushing, and therefore such a peripheral speed is not preferable. A peripheral speed lower than the above range reduces the treatment amount per unit time in the gel-crushing step, and therefore such a peripheral speed is not preferable. In a case where the rotation axes include disks having different peripheral speeds, the ratio of the peripheral speed in one rotation axis to the peripheral speed in the other rotation axis is usually in the range of 1 to 10, and preferably in the range of 1 to 2.

$$\text{Peripheral speed (V) (m/s)} = \pi D \times n/60 \cdots \text{(Formula 3)}$$

In (Formula 3), V represents the peripheral speed of a disk (unit: m/s), D represents the maximum diameter of the disk (unit: m), and n represents the rotation speed of the disk per unit time (unit: rpm).

The rotation directions of the plurality of rotation axes may be the same so that the rotation axes rotate in the same direction, or may be different so that the rotation axes rotate in opposite directions. In a gel-crushing device with the same rotation direction, a self-cleaning property can be expected, and in a gel-crushing device with different rotation directions, a strong shearing force can be expected. The rotation direction of each rotation axis is appropriately selected according to the combination with the above-described arrangement of the crusher (disk pattern).

The gel-crushing device preferably has a function of supplying water and/or water vapor to the inside of the main body. By crushing a gel while supplying water and/or water vapor (preferably water and water vapor), a water-absorbing resin powder can be obtained that is further excellent in water absorption speed. Therefore, according to one embodiment of the present invention, water and/or water vapor is supplied inside the main body in the gel-crushing step. In another preferred embodiment, water and water vapor is supplied inside the main body in the gel-crushing step. The gel-crushing device may include a plurality of input ports as a means for supplying water and/or water vapor. The input port of water and/or water vapor may be placed at any position, and is preferably placed on the side of the input port of the hydrogel. Water and water vapor may be supplied from different input ports.

The way of adding water vapor is not particularly limited, and for example, a gas such as air, dry air, or nitrogen may be mixed with water vapor and added as a mixed gas. The pressure of the water vapor to be added is not particularly limited, and is preferably 0.2 to 0.8 MPa, and more preferably 0.3 to 0.7 MPa. The temperature of the water and/or the water vapor (including the mixed gas) is not particularly limited, and is preferably 50°C or higher, more preferably 60°C or higher, still more preferably 70°C or higher, and particularly preferably 80°C or higher. The temperature is preferably 200°C or lower, more preferably 170°C or lower, still more preferably 150°C or lower, still even more preferably 120°C or lower, and particularly preferably 100°C or lower, from the viewpoint of suppressing excessive temperature rise and hydrogel drying. In a preferred embodiment, the water and/or the water vapor supplied to the inside of the main body has a temperature of 50 to 120°C. It is also possible to adjust the temperature of the hydrogel and the particulate hydrogel in the gel-crushing device according to the temperature and the input amount of the water and/or the water vapor (including the mixed gas) used. In this case, the water vapor and/or the mixed gas acts as a heat medium for direct heat transfer to heat or keep the hydrogel and the particulate hydrogel inside the main body to a predetermined temperature. In the water and/or the water vapor (including the mixed gas) to be added, additives may be blended such as a gel-fluidizing agent, a crosslinking agent, an oxidizer, a reducing agent, and a polymerization initiator described below.

The amount of the water and/or the water vapor supplied is preferably 0.1 mass% to 50 mass%, more preferably 0.5 mass% to 40 mass%, and still more preferably 1 mass% to 30 mass% with respect to the mass of the hydrogel converted to a solid content.

The gel-crushing device used in the production method according to the present invention preferably includes the heating means and/or the heat-retaining means on the outer surface of the main body, and a liquid heat medium such as hot water or oil may be introduced into a jacket or the like placed on the outer surface of the main body, or a heated gas (hot gas) may be introduced as a heat medium. These heat media act as heat media for indirect heat transfer. The temperature of the heat medium is preferably 50°C or higher, more preferably 60°C or higher, still more preferably 70°C or higher, and particularly preferably 80°C or higher, from the viewpoint of heating efficiency and/or heat-retaining efficiency of indirect heat transfer. Meanwhile, from the viewpoint of suppressing excessive temperature rise and hydrogel drying, the temperature of the heat medium is preferably 200°C or lower, more preferably 170°C or lower, still more preferably 150°C or lower, still even more preferably 130°C or lower, and particularly preferably 110°C or lower. Particularly preferred heat media are hot water and water vapor. The temperature of the heat medium may be constant, or may be appropriately changed during gel-crushing.

More preferably, the temperature of the inside (inner surface) of the main body is heated to 50°C or higher, more preferably 60°C or higher, still more preferably 70°C or higher, and still even more preferably 80°C or higher before the hydrogel is put into the gel-crushing device. This heating reduces adhesion of the hydrogel to the inner surface of the main body. In addition, this heating further improves the water absorption speed of the resulting water-absorbing resin powder. That is, in the production method according to the present invention, the inner surface of the main body is preferably heated to the above-described temperature or higher before input of the hydrogel at the start of gel-crushing. More preferably, the inner surface and the plurality of rotation axes of the main body and the outer surface of the crusher included in each rotation axis are preferably heated to the above-described temperature or higher. Meanwhile, from the viewpoint of suppressing excessive temperature rise and hydrogel drying, the heating temperature of the inside (inner surface) of the main body is preferably 200°C or lower, more preferably 170°C or lower, still more preferably 150°C or lower, still even more preferably 130°C or lower, and particularly preferably 110°C or lower before the hydrogel is put into the gel-crushing device. For example, the temperature of the inside (inner surface) of the main body can be adjusted to a desired range by circulating and keep-circulating a heat medium inside the jacket provided in the main body. The temperature of the inside (inner surface) of the main body is preferably kept in the above range in the gel-crushing step from the viewpoint of keeping the temperature in the gel-crushing step at 50°C or higher.

Here, the phrase "the crosslinked hydrogel polymer is continuously crushed at 50°C or higher" means that the crosslinked hydrogel polymer is continuously crushed while the temperature of the crosslinked hydrogel polymer is maintained at 50°C or higher in the section shown by (A) in Fig. 1, that is, the section from the input port to the discharge port exclusive. In other words, the phrase "the crosslinked hydrogel polymer is continuously crushed by the crusher at 50°C or higher" refers to the state "the crosslinked hydrogel polymer in a state of being maintained at 50°C or higher is continuously crushed by the crusher". For example, if the temperature T1 of the crosslinked hydrogel polymer to be put into the input port of the gel-crushing device is 50°C or higher and the temperature of the heat medium in the jacket placed outside the main body of the gel-crushing device is 50°C or higher, the temperature of the crosslinked hydrogel polymer can be maintained at 50°C or higher in the section (A) in Fig. 1, and thus the crosslinked hydrogel polymer can be continuously crushed at 50°C or higher. The above definition also includes, for example, a case in which although the temperature T1 of the crosslinked hydrogel polymer to be put into the input port of the gel-crushing device is 50°C or lower, the temperature of the crosslinked hydrogel polymer is rapidly raised, for example, by supplying high-temperature water and/or water vapor at the input port portion or by setting the temperature of the heat medium in the jacket of the main body of the gel-crushing device to a high temperature and thus the crosslinked hydrogel polymer is continuously crushed at 50°C or higher in the portion (A).

The temperature at which the crosslinked hydrogel polymer is continuously crushed is 50°C or higher, preferably 60°C or higher, more preferably 70°C or higher, and still more preferably 80°C or higher.

The upper limit of the temperature at which the crosslinked hydrogel polymer is continuously crushed is not particularly limited, but from the viewpoint of suppressing excessive temperature rise and hydrogel drying, the upper limit is preferably 200°C or lower, more preferably 170°C or lower, still more preferably 150°C or lower, still even more preferably 130°C or lower, and particularly preferably 110°C or lower.

In the case of a large gel-crushing device, a heat medium is preferably circulated as a heating means and/or a heat-retaining means also inside the plurality of rotation axes. This circulation can shorten the time for raising the temperature of the inside of the main body at the time of starting the gel-crushing device.

The average retention time of the hydrogel in the gel-crushing device is not particularly limited as long as the hydrogel is adjusted to an intended particle size, but from the viewpoint of reducing mechanical damage to the hydrogel, the average retention time is preferably 30 seconds to 30 minutes. In the gel-crushing device, the average retention time of the hydrogel is adjusted by the rotation speed of each rotation axis and the input speed of the hydrogel.

In the gel-crushing device used in the production method according to the present invention, using no die (die plate) is the most preferable, but a die may be placed at the discharge port as long as an effect of the present invention can be obtained. In the case of using a die, the die preferably has an aperture ratio of 250 or more, more preferably 500 or more, still more preferably 600 or more, still even more preferably 700 or more, and particularly preferably 80% or more. The upper limit of the aperture ratio is not particularly limited. The term "aperture ratio of 1000" is synonymous with the term "using no die". The die (die plate) is a plate having (a plurality of) through holes for discharge of the material inside the main body, and is placed in the vicinity of the discharge port of the crusher. The aperture ratio refers to the ratio of the area of the total through holes in planar view to the area of the die in planar view. As the aperture ratio is larger, the material inside the main body is less likely to be dammed and more likely to be charged, resulting in a more remarkable effect of the present invention.

Figs. 1 and 2 illustrate an example of a gel-crushing device 200 used in the production method according to the present invention. Fig. 1 is a partially cutaway side view of the gel-crushing device 200, and Fig. 2 is an enlarged view of the gel-crushing device 200 (a view of the central part of the main body as viewed from above). Hereinafter, a basic configuration and a method of use of the gel-crushing device 200 will be described with reference to Figs. 1 and 2.

As illustrated in the drawing, the gel-crushing device 200 includes an input port 204, a main body 208, two rotation axes 206, a discharge port 210, a drive device 214, and a gas inlet 216. The main body 208 is also referred to as a barrel. In Fig. 1, two rotation axes 206 are provided, in order along the direction orthogonal to the paper surface. Each rotation axis 206 extends in the length direction of the main body 208. One end of the rotation axis 206 penetrates the main body 208 and is connected to the drive device 214. Although not illustrated, in the gel-crushing device 200, the other end of the rotation axis 206 is rotatably supported by a bearing placed behind the rotation axis 206. That is, the rotation axis 206 is formed to be held at both ends. However, the gel-crushing device in the production method according to the present invention is not limited to such a double-supported form, and may have a so-called cantilever structure without a bearing behind the discharge port 210 as long as an object of the present invention is achieved. The Input port 204, the gas inlet 216, and the discharge port 210 are each fixed to the main body 208 and linked to the inside of the main body 208. The left-right direction in Fig. 1 is the length direction of the main body 208 and the axial direction of the rotation axis 206. Although not illustrated, the main body 208 has a jacket structure.

Fig. 2 illustrates a part of the main body 208 of the gel-crushing device 200. Fig. 2 is an enlarged view of the gel-crushing device in Fig. 1 (a view of the central part of the main body as viewed from above). As illustrated in the drawing, the gel-crushing device 200 has two rotation axes 206 incorporated in the main body 208. The two rotation axes 206 each have an outer periphery on which a crusher 212 is provided. That is, the crusher 212 and the rotation axis 206 are configured as separate bodies. In this embodiment, the rotation axis 206 includes a plurality of disks as the crusher 212. The vertical direction in Fig. 2 is the width direction of the main body 208. The left-right direction in Fig. 2 is the length direction of the main body 208 and the axial direction of the rotation axis 206.

In a preferred embodiment in which the gel-crushing step is performed using the gel-crushing device 200, first, a heat medium is circulated in the jacket, which is not illustrated, to heat the main body 208. Thereafter, each rotation axis 206 is rotated by the drive device 214 (such as a motor). As the rotation axis 206 rotates, the rotation axis 206 and the plurality of disks as the crusher 212 rotate.

Next, a hydrogel is continuously put into the input port 204. At this time, water and/or water vapor may be simultaneously put into the input port 204. Furthermore, water vapor and/or water may be put into the gas inlet 216. The hydrogel and the main body 208 are heated by the water and/or the water vapor, and kept at a predetermined temperature.

The hydrogel put into the main body 208 moves toward the discharge port 210.

The hydrogel is in contact with the crusher 212 (that is, a plurality of disks) in the main body 208. The hydrogel is grain-refined by shearing action of the plurality of rotating disks. The hydrogel moves toward the discharge port 210, while crushed by the shearing action of the crusher 212. At the discharge port 210, a particulate hydrogel adjusted to a predetermined particle size is taken out.

The rotation axis of the gel-crushing device includes a plurality of disks. The plurality of disks may have the same shape or different shapes, and preferably have different shapes. The combination of the disks is appropriately changed according to the physical properties of the hydrogel, an intended size of the crushed gel, and the like with reference to, for example, Patent Literature (JP 2005-35212 A).

Examples of the gel-crushing device having such a basic configuration include multiaxial kneaders (kneaders) having two or more axes. Specific examples of the multiaxial kneaders include biaxial, triaxial, four-axial, and eight-axial kneaders. As the gel-crushing device, a continuous crusher is preferably used from the viewpoint of production efficiency. Specific examples of the gel-crushing device include a CKH continuous kneader (manufactured by HONDA MACHINERY WORKS CO., LTD.), a twin-screw extruder, TEX (manufactured by The Japan Steel Works, Ltd.), a twin-screw extruder, TEX αIII (manufactured by The Japan Steel Works, Ltd.), a continuous kneader (CONTINUOUS KNEADER manufactured by DALTON CORPORATION), a KRC hybrid reactor (KRC HYBRID REACTER manufactured by Kurimoto, Ltd.), a KRC kneader (KURIMOTO-READCO CONTINUOUS KNEADER manufactured by Kurimoto, Ltd.), a KEX extruder (KEX EXTRUDER manufactured by Kurimoto, Ltd.), a KEXD extruder (KEXD EXTRUDER manufactured by Kurimoto, Ltd.), a double-arm kneader ruder (KNEADER-RUDER manufactured by MORIYAMA), a twin-screw kneading extruder, TEX-SSG (manufactured by Toshiba Machine Co., Ltd.), a twin-screw kneading extruder, TEX-CS (manufactured by Toshiba Machine Co., Ltd.), a twin-screw kneading extruder, TEX-SX (manufactured by Toshiba Machine Co., Ltd.), a twin-screw kneading extruder, TEX-DS (manufactured by Toshiba Machine Co., Ltd.), a twin-screw kneading extruder, TEX-A (manufactured by Toshiba Machine Co., Ltd.), a twin-screw kneading extruder, TEX-B (manufactured by Toshiba Machine Co., Ltd.), a twin-screw kneading extruder, TEX-BS (manufactured by Toshiba Machine Co., Ltd.), and quad/octa screw kneading extruders, WDR series (manufactured by TECHNOVEL CORPORATION). Therefore, in a preferred embodiment of the present invention, the gel-crushing device is a continuous multiaxial kneader.

(Gel grinding energy)

The gel grinding energy (GGE), which is described in WO 2011/126079 A (corresponding to US 2013/026412 A and US 2016/332141 A), means mechanical energy per unit mass (unit mass of a hydrogel) required by a gel-crushing device at the time of gel-crushing the hydrogel, and is calculated by the following (Formula 5) in the case of a gel-crushing device driven by three-phase AC power.

$$\text{Gel grinding energy } [\text{J/g}] = \{3^{1/2} \times \text{voltage} \times \text{current} \times \text{power factor} \times \text{motor efficiency}\}/\{\text{mass of hydrogel put into gel-crushing device in 1 second}\} \cdots \text{(Formula 5)}$$

Here, the power factor and the motor efficiency are values unique to the gel-crushing device that depend on, for example, operating conditions of the gel-crushing device, and are values of 0 to 1. In the case of a gel-crushing device driven by single-phase AC power, the value $3^{1/2}$ in the above formula is changed to 1 to calculate the gel grinding energy. In the above (Formula 5), the unit of the voltage is [V], the unit of the current is [A], and the unit of the mass of the hydrogel is [g]. The preferred gel grinding energy (GGE) applied in the present invention is to be 15 J/g or more, and is preferably 25 J/g or more, more preferably 40 J/g or more, still more preferably 50 J/g or more, still even more preferably 100 J/g or more, and most preferably 120 J/g or more. The upper limit is to be 200 J/g or less.

(Gel temperature)

In the gel-crushing step, the temperature T1 of the crosslinked hydrogel polymer to be put into the input port of the gel-crushing device (hereinafter, also referred to as "gel temperature T1 at the input port" or simply "gel temperature T1") is preferably 50°C or higher from the viewpoint of continuously crushing the crosslinked hydrogel polymer at 50°C or higher. The gel temperature T1 is preferably measured with a thermometer placed at the input port. The gel temperature T1 is preferably 60°C or higher from the viewpoint of preventing adhesion between crushed hydrogels, and is more preferably 70°C or higher and still more preferably 80°C or higher from the viewpoint of further improving the water absorption speed of the water-absorbing resin powder. The gel temperature T1 is preferably 130°C or lower, more preferably 110°C or lower, still more preferably 100°C or lower, and particularly preferably 90°C or lower, from the viewpoint of suppressing excessive drying. For the same reason, the gel temperature at the time of crushing is preferably 130°C or lower. The gel temperature T1 of the crosslinked hydrogel polymer to be put into the gel-crushing device can be adjusted within a desired range by keeping the temperature of the crosslinked hydrogel polymer in which temperature rise is caused by heat of polymerization, or by heating the obtained crosslinked hydrogel polymer.

The temperature T2 of the crosslinked particulate hydrogel polymer discharged from the gel-crushing device (hereinafter, also referred to as "gel temperature T2 at the discharge port" or simply "gel temperature T2") is preferably 60°C to 140°C, more preferably 70°C to 130°C, still more preferably 80°C to 125°C and 85°C to 120°C, particularly preferably 90°C to 115°C, and most preferably 100 to 115°C, from the viewpoint of suppressing aggregation between crushed hydrogels. It is preferable that the temperature T2 be set in this temperature range and the temperature T1 be set in the above-described temperature range. The gel temperature T2 is preferably measured with a thermometer placed at the discharge port. The gel temperature T2 can be adjusted within a desired range by appropriately adjusting the preset temperature of the heating means and/or the heat-retaining means of the gel-crushing device, and by adjusting the retention time of the crosslinked hydrogel polymer inside the gel-crushing device.

The gel temperature T2 at the discharge port is preferably higher than the gel temperature T1 at the input port from the viewpoint of further improving the water absorption speed of the water-absorbing resin powder. The difference $\Delta T = (T2 - T1)$ is preferably 5°C or higher, more preferably 8°C or higher, and still more preferably 10°C or higher. The difference $\Delta T = (T2 - T1)$ is preferably 60°C or lower, more preferably 50°C or lower, still more preferably 40°C or lower, and particularly preferably 35°C or lower. It is preferable that the difference $\Delta T = (T2 - T1)$ be set in this temperature range and the temperature T1 and the temperature T2 be set in the above-described temperature range. $\Delta T$ can be adjusted within a desired range by adjusting each of T1 and T2 as described above.

(Gel solid content)

In the gel-crushing step, the solid content of the hydrogel to be put into the input port of the gel-crushing device (hereinafter, referred to as a gel solid content) is determined with the measurement method described in Examples below. The gel solid content is preferably 25 mass% to 75 mass%, more preferably 30 mass% to 70 mass%, still more preferably 35 mass% to 65 mass%, and particularly preferably 40 mass% to 60 mass%, from the viewpoint of the degree of aggregation between crushed hydrogels, the energy required for crushing, the drying efficiency, and the absorption performance.

(Gel-fluidizing agent)

In the production method according to the present invention, a gel-fluidizing agent is preferably added before and/or during the gel-crushing step. As a result, a particulate hydrogel containing the gel-fluidizing agent is taken out from the discharge port. Adding the gel-fluidizing agent enables to obtain an effect of suppressing strong adhesion or bonding between finely crushed gel fine particles and improving the water absorption speed of the obtained water-absorbing resin. Furthermore, the load is reduced in the pulverizing step after the drying step and the cracking step during the sizing step described below, resulting in a further effect of reducing the amount of fine powder generated. The gel-fluidizing agent is more preferably added during the gel-crushing step and still more preferably added simultaneously with input of the hydrogel, from the viewpoint that particles of the resulting particulate hydrogel uniformly contain the gel-fluidizing agent.

The amount of the gel-fluidizing agent added is appropriately set according to the solid content of the hydrogel or the particulate hydrogel and the kind of the gel-fluidizing agent. The amount is preferably 0.001 mass% to 5 mass%, more preferably 0.01 mass% to 3 mass%, still more preferably 0.02 mass% to 2 mass%, and particularly preferably 0.03 mass% to 1 mass% with respect to the solid content of the hydrogel.

Examples of the gel-fluidizing agent include anionic, cationic, nonionic, and amphoteric surfactants, low-molecular-weight surfactants and high-molecular-weight surfactants thereof, and polymer lubricants. Among them, surfactants are preferable.

(Surfactant)

Specific examples of the surfactant used as the gel-fluidizing agent include (1) nonionic surfactants such as sucrose fatty acid esters, polyglyceryl fatty acid esters, sorbitan fatty acid esters, polyoxyethylene sorbitan fatty acid esters, polyoxyethylene glycerin fatty acid esters, sorbitol fatty acid esters, polyoxyethylene sorbitol fatty acid esters, polyoxyethylene alkyl ethers, polyoxyethylene alkyl phenyl ethers, polyoxyethylene castor oil, polyoxyethylene hydrogenated castor oil, alkyl allyl formaldehyde condensed polyoxyethylene ethers, polyoxyethylene polyoxypropylene block copolymers, polyoxyethylene polyoxypropyl alkyl ethers, polyethylene glycol fatty acid esters, alkyl glucosides, N-alkyl gluconamides, polyoxyethylene fatty acid amides, polyoxyethylene alkylamines, phosphoric acid esters of polyoxyethylene alkyl ethers, and phosphoric acid esters of polyoxyethylene alkyl allyl ethers, (2) amphoteric surfactants such as alkyl dimethylaminoacetic acid betaines such as caprylic dimethylaminoacetic acid betaine, lauryl dimethylaminoacetic acid betaine, myristyl dimethylaminoacetic acid betaine, and stearyl dimethylaminoacetic acid betaine, alkylamide propyl betaines such as lauric acid amide propyl betaine, coconut oil fatty acid amide propyl betaine, and palm kernel oil fatty acid amide propyl betaine, alkyl hydroxysulfobetaines such as lauryl hydroxysulfobetaine, and alkyl carboxymethyl hydroxyethyl imidazolinium betaines such as 2-alkyl-N-carboxymethyl-N-hydroxyethyl imidazolinium betaine, (3) anionic surfactants such as alkyl amino diacetic acid monoalkali metal salt such as lauryl amino diacetic acid monosodium salt, lauryl amino diacetic acid potassium, and myristyl amino sodium diacetate, and (4) cationic surfactants such as long-chain alkyl dimethylaminoethyl quaternary salts. Two or more of these may be used in combination. Among them, amphoteric surfactants are preferable, and alkyl dimethylaminoacetic acid betaines are more preferable from the viewpoint of further improving the water absorption speed of the water-absorbing resin powder.

(Polymer lubricant)

In the production method according to the present invention, polymer lubricants exemplified below can be added to the aqueous monomer solution or the hydrogel as long as an object of the present invention is achieved.
Specific examples of the polymer lubricant include maleic anhydride-modified polyethylene, maleic anhydride-modified polypropylene, a maleic anhydride-modified ethylene-propylene copolymer, a maleic anhydride-modified ethylene-propylene-diene terpolymer (EPDM), maleic anhydride-modified polybutadiene, a maleic anhydride-ethylene copolymer, a maleic anhydride-propylene copolymer, a maleic anhydride-ethylene-propylene copolymer, a maleic anhydride-butadiene copolymer, polyethylene, polypropylene, an ethylene-propylene copolymer, oxidized polyethylene, oxidized polypropylene, an oxidized ethylene-propylene copolymer, an ethylene-acrylic acid copolymer, ethyl cellulose, ethyl hydroxyethyl cellulose, polyalkylene oxides such as polyethylene glycol, and side-chain and/or terminal polyether-modified polysiloxanes. These polymer lubricants have a molecular weight (weight average molecular weight) appropriately selected in a range of preferably 200 to 2000000, and more preferably 400 to 1000000. Two or more of these may be used in combination.
These polymer lubricants and the above-described surfactants may be also used in combination as a gel-fluidizing agent. In the case of using a surfactant and a polymer lubricant in combination, the total amount of the surfactant and the polymer lubricant added is appropriately set according to the form of polymerization, the composition of the aqueous monomer solution, and the moisture content of the hydrogel. In the case of adding the surfactant and the polymer lubricant to the aqueous monomer solution, the concentration with respect to the monomer component is set, in the case of adding to the hydrogel, the concentration with respect to the solid content of the hydrogel is set, and in the case of adding to both the aqueous monomer solution and the hydrogel, the sum of the above is set.
The total amount of the surfactant and the polymer lubricant added is preferably 5 mass% or less and more preferably 3 mass% or less, and preferably 0.001 mass% or more and particularly preferably 0.01 mass% or more with respect to the solid content of the hydrogel.

(Surface tension)

The kind and the amount of the gel-fluidizing agent added are appropriately adjusted in consideration of, for example, suppression of aggregation of the particulate hydrogel in the gel-crushing step and the drying step. The kind and the amount of the gel-fluidizing agent are preferably such that the surface tension of the water-absorbing resin in the final product is not excessively reduced, from the viewpoint of, for example, the amount of returned liquid in actual use of the resulting water-absorbing resin powder in an absorbent article (diaper). For example, the kind and the amount of the gel-fluidizing agent are selected so that the surface tension of the water-absorbing resin (surface tension of the dispersion of the water-absorbing resin in physiological saline) is preferably 55 mN/m or more, more preferably 60 mN/m or more, and still more preferably 65 mN/m or more. This surface tension is measured with the method described in WO 2015/129917. Examples of the gel-fluidizing agent capable of setting the surface tension within such a range include amphoteric surfactants.

(Other additives)

The surface-crosslinking agents described in [2-7-1] and other additives described in [2-10] may be added during the gel-crushing step or during transition from the gel-crushing step to the next drying step.

(Particle size of particulate hydrogel)

In the production method according to the present invention, the crosslinked particulate hydrogel polymer discharged from the discharge port of the gel-crushing device has a mass average particle diameter d1 of 3 mm or less as converted to a solid content, from the viewpoint of the absorption rate of the water-absorbing resin powder to be produced. If d1 is more than 3 mm, the crosslinked particulate hydrogel polymer cannot be subjected to the subsequent step and therefore a water-absorbing resin powder cannot be obtained (Experimental Example 5 described below) . d1 is preferably 1 um to 3 mm, more preferably 10 um to 3 mm, still more preferably 30 um to 2 mm, still even more preferably 50 um to 1 mm, and particularly preferably 100 um to 200 um. The mass average particle diameter d1 as converted to a solid content of the crosslinked particulate hydrogel polymer discharged from the discharge port of the gel-crushing device can be controlled by, for example, the temperature of the crosslinked hydrogel polymer at the time of crushing (controlled by, for example, the temperature inside the main body of the crusher and the temperature of water and/or water vapor supplied to the inside of the main body), the minimum clearance with respect to the maximum diameter of the disk of the gel-crushing device, the input speed of the hydrogel, the rotation speed of the rotation axis of the gel-crushing device, and the gel grinding energy (GGE). The mass average particle diameter d1 of the particulate hydrogel converted to a solid content is defined by the methods of measuring physical properties (g) and (h) described below.

In the particle size distribution of the particulate hydrogel, the rate of particles having a particle size in the range of less than 150 um as converted to a solid content is preferably 10 mass% or more, more preferably 25 mass% or more, and still more preferably 40 mass% or more. In the particle size distribution of the particulate hydrogel, the rate of particles having a particle size in the range of less than 850 $\mu$m as converted to a solid content is preferably 80 mass% or more, more preferably 85 mass% or more, still more preferably 90 mass% or more, and particularly preferably 95 mass% or more, and the upper limit is 100 mass%. The logarithmic standard deviation ($\sigma\zeta$) of the particle size distribution is 0.2 to 1.0, more preferably 0.2 to 0.8, and still more preferably 0.2 to 0.7.

(Solid content of particulate hydrogel)

The particulate hydrogel discharged from the discharge port of the gel-crushing device preferably has a solid content of 25 mass% to 75 mass%, more preferably 30 mass% to 70 mass%, still more preferably 35 mass% to 65 mass%, and particularly preferably 40 mass% to 60 mass%. By subjecting a particulate hydrogel having a solid content in the above range to the drying step, a granular dried product having a high CRC and little damage from drying (such as an increase of the water soluble component) is obtained.

(Rate of polymerization of particulate hydrogel)

The rate of polymerization of the particulate hydrogel discharged from the gel-crushing device is in the range of the rate of polymerization before input into the gel-crushing device, and the polymerization may be further progressed in the gel-crushing step. The degree of progress of polymerization is appropriately adjusted by heating and retention time in the gel-crushing device, the amount of the polymerization initiator remaining in the hydrogel after polymerization, the amount of an optional post-added polymerization initiator, and the like. The rate of polymerization after the gel-crushing step is defined by the methods of measuring physical properties described below, as the rate of polymerization before gel-crushing. The rate of polymerization of the particulate hydrogel after gel-crushing is 90 mass% or more, preferably 95 mass% or more, more preferably 98 to 99.99 mass%, and ideally 100%. In the particulate hydrogel having a rate of polymerization in the above range, aggregation and adhesion during drying are avoided.

[2-5] Drying step

This is a step of drying the crosslinked particulate hydrogel polymer, preferably the crosslinked particulate hydrogel polymer containing a gel-fluidizing agent to a desired solid content to obtain a dried product. The term "solid content" means a value calculated from the amount lost from drying (mass change at the time of drying 1.0 g of a sample at 180°C for 3 hours).

The solid content of the dried product after the drying step is preferably 80 mass% or more, more preferably 85 mass% to 99.8 mass%, still more preferably 90 mass% to 99.7 mass%, still even more preferably 92 mass% to 99.5 mass%, particularly preferably 96 mass% to 99.5 mass%, and extremely preferably 98 mass% to 99.5 mass%. If the solid content after drying is excessively high, not only long-time drying is required, but also deterioration of physical properties and coloring may be caused after drying. If the solid content after drying is low, the productivity in the sizing step described below may deteriorate, and the centrifuge retention capacity (CRC) may deteriorate. In a case where the surface crosslinking step described below is performed after the drying step, drying to the above-described solid content further improves the physical properties, and therefore such drying is preferable. The moisture content (= 100 - solid content) of the dried product is determined from the solid content.

The drying method in the drying step of the present invention is not particularly limited, and ventilation drying, stirring drying, fluidized bed drying, or the like is appropriately used. Various drying methods can be used such as heat drying, hot gas drying, drying under reduced pressure, infrared drying, microwave drying, drum dryer drying, drying by azeotropic dehydration with a hydrophobic organic solvent, and high humidity drying by use of high temperature water vapor.

(Dryer)

The dryer used in the drying step is not particularly limited, and one or more of a conductive heat transfer dryer, a radiation heat transfer dryer, a hot gas heat transfer dryer, a dielectric heating dryer, and the like are appropriately selected. A batch or continuous dryer may be used. A direct heating or indirect heating dryer may be used. Examples of the dryer include heat transfer dryers such as a through-flow band drier, a through-flow circuit drier, a vertical through-flow drier, a parallel flow band drier, a through-flow tunnel drier, a through-flow stirring drier, a through-flow rotating dryer, a fluidized-bed drier, and an air flow drier.

The heating means is not particularly limited, but from the viewpoint of drying efficiency and reduction of thermal damage to the water-absorbing resin, the heating means for the particulate hydrogel preferably uses direct heat transfer by convection heat transfer and/or indirect heat transfer by heat conduction from a heating surface (contact surface with the particulate hydrogel, heat source portion) of the dryer heated with a heat medium. More preferable heating means include ventilation heating by direct heat transfer, and outer wall heating and tubular heating by indirect heat transfer.

In the drying step, a gas may be introduced into the dryer. The gas is not particularly limited, and examples of the gas include air, dry air, nitrogen, water vapor, and mixed gases thereof. The gas acts as a carrier gas to discharge water vapor generated during drying to the outside of the dryer, and thus promotes drying. In the case of using a heated gas, the gas also acts as a heat medium, and thus further promotes drying. Preferably, a gas is used such as nitrogen, water vapor, or a mixed gas of these with air. In the case of using a mixed gas containing water vapor (hereinafter, also referred to as a high humidity mixed gas), the inside of the dryer is in a low oxygen state, and thus oxidation and deterioration during drying are suppressed. As a result, the water-absorbing resin can achieve performance improvement and low coloring. The gas may flow in the direction parallel, opposite, or both parallel and opposite to the moving direction of the particulate hydrogel as an object to be dried.

The drying conditions are appropriately selected according to the kind of the dryer, the solid content of the particulate hydrogel, and the like, but the drying temperature is preferably 100°C to 300°C, more preferably 150°C to 250°C, still more preferably 160°C to 220°C, and particularly preferably 170°C to 200°C. A drying temperature lower than the above range extends the drying time excessively, and therefore is uneconomical. A drying temperature higher than the above range causes deterioration of physical properties and remarkable coloring in the water-absorbing resin, and therefore is not preferable. The drying time is preferably 1 minute to 10 hours, more preferably 5 minutes to 2 hours, still more preferably 10 minutes to 120 minutes, and particularly preferably 20 minutes to 60 minutes. A drying time less than the above range needs an excessively high drying temperature and thus causes deterioration of physical properties and remarkable coloring in the water-absorbing resin, and therefore is not preferable. A drying time more than the above range needs a huge dryer and causes a decrease in the throughput, and therefore is uneconomical.

[2-6] Pulverizing and classification step

This is a step of pulverizing and/or classifying the dried product obtained in the drying step to obtain a water-absorbing resin powder preferably having a specific particle size. This step is different from the (2-4) gel-crushing step in that the object to be pulverized is obtained through the drying step.

This step is performed before and/or after the [2-7] surface crosslinking step, and preferably before the [2-7] surface crosslinking step. This step may be performed at least twice before and after the [2-7] surface crosslinking step.

Examples of the device (pulverizer) used in the pulverizing step of the present invention include highspeed rotary pulverizers such as roll mills, hammer mills, screw mills, and pin mills, vibrating mills, knuckle pulverizers, and cylindrical mixers, and these devices are used in combination as necessary.

(Particle size)

The water-absorbing resin powder before surface crosslinking preferably has a weight average particle diameter (D50) of 200 um or more, more preferably 200 um to 600 um, still more preferably 250 um to 550 um, and particularly preferably 300 um to 500 um from the viewpoint of water absorption speed, absorption capacity under load, and the like.

The content of fine particles having a particle diameter of less than 150 um that are classified by standard sieving is preferably as small as possible, and is preferably 0 to 5 wt%, more preferably 0 to 3 wt%, and still more preferably 0 to 2 wt% with respect to the entire water-absorbing resin powder.

The content of coarse particles having a particle diameter of more than 850 um that are classified by standard sieving is also preferably as small as possible, and is preferably 0 to 5 wt%, more preferably 0 to 3 wt%, and still more preferably 0 to 1 wt% with respect to the entire water-absorbing resin powder, from the viewpoint of water absorption speed and the like.

The proportion of particles having a particle diameter of 150 um or more and less than 850 um is preferably 90 wt% or more, more preferably 95 wt% or more, still more preferably 98 wt% or more, and particularly preferably 99 wt% or more (with an upper limit of 100 wt%) with respect to the entire water-absorbing resin powder, from the viewpoint of water absorption speed, absorption capacity under load, and the like.

[2-7] Surface crosslinking step

This is a step of adding a surface-crosslinking agent that reacts with a functional group (particularly a carboxyl group) in the water-absorbing resin powder obtained through the [2-6] pulverizing and classification step to cause a crosslinking reaction, and is also referred to as a post-crosslinking step. In this step in the production method according to the present invention, a surface-crosslinking agent is added to the water-absorbing resin powder, and then the resulting powder is heat-treated to cause a crosslinking reaction. This step includes a surface-crosslinking agent addition step and a heat treatment step, and may include a cooling step after the heat treatment step as necessary.

[2-7-1] surface-crosslinking agent addition step

This is a step of mixing the water-absorbing resin powder and a surface-crosslinking agent to prepare a water-absorbing resin powder containing a surface-crosslinking agent to be subjected to the surface crosslinking step.

(Surface-crosslinking agent)

The surface-crosslinking agent used is capable of reacting, preferably capable of covalently bonding or ionically bonding, and more preferably capable of covalently bonding with a plurality of functional groups (preferably a plurality of carboxyl groups) in the water-absorbing resin. Specific examples of the surface-crosslinking agent include: polyhydric alcohol compounds such as ethylene glycol, diethylene glycol, propylene glycol, triethylene glycol, tetraethylene glycol, polyethylene glycol, 1,3-propanediol, dipropylene glycol, 2,2,4-trimethyl-1,3-pentanediol, polypropylene glycol, glycerin, polyglycerin, 2-butene-1,4-diol, 1,3-butanediol, 1,4-butanediol, 1,5-pentanedial, 1,6-hexanediol, 1,2-cyclohexanedimethanol, 1,2-cyclohexanol, trimethylolpropane, diethanolamine, triethanolamine, polyoxypropylene, an oxyethylene-oxypropylene block copolymer, pentaerythritol, and sorbitol; epoxy compounds such as ethylene glycol diglycidyl ether, polyethylene glycol diglycidyl ether, glycerol polyglycidyl ether, diglycerol polyglycidyl ether, polyglycerol polyglycidyl ether, propylene glycol diglycidyl ether, polypropylene glycol polyglycidyl ether, glycidol, sorbitol polyglycidyl ether, pentaerythritol polyglycidyl ether, trimethylolpropane polyglycidyl ether, neopentyl glycol diglycidyl ether, and 1,6-hexanediol diglycidyl ether; polyvalent amine compounds such as ethylene diamine, diethylene triamine, triethylene tetramine, tetraethylene pentamine, pentaethylene hexamine, polyethyleneimine, and inorganic salts and organic salts thereof; polyvalent isocyanate compounds such as 2,4-tolylene diisocyanate and hexamethylene diisocyanate; aziridine compounds such as polyaziridine; polyvalent oxazoline compounds such as 1,2-ethylenebisoxazoline, bisoxazoline, and polyoxazoline; carbonic acid derivatives such as urea, thiourea, guanidine, dicyandiamide, and 2-oxazolidinone; alkylene carbonate compounds such as 1,3-dioxolan-2-one (ethylene carbonate), 4-methyl-1,3-dioxolan-2-one, 4,5-dimethyl-1,3-dioxolan-2-one, 4,4-dimethyl-1,3-dioxolan-2-one, 4-ethyl-1,3-dioxolan-2-one, 4-hydroxymethyl-1,3-dioxolan-2-one, 1,3-dioxane-2-one, 4-methyl-1,3-dioxane-2-one, 4,6-dimethyl-1,3-dioxane-2-one, and 1,3-dioxopan-2-one; haloepoxy compounds such as epichlorohydrin, epibromohydrin, $\alpha$-methylepichlorohydrin, and polyvalent amine adducts thereof; oxetane compounds; silane coupling agents such as $\gamma$-glycidoxypropyltrimethoxysilane and $\gamma$-aminopropyltri-ethoxysilane; and polyvalent metal compounds such as hydroxides, chlorides, sulfates, nitrates, and carbonates of zinc, calcium, magnesium, aluminum, iron, zirconium, and the like. Two or more of these may be used in combination. Among the above surface-crosslinking agents, one or more selected from polyvalent metal ions, epoxy-based compounds, oxazoline-based compounds, and alkylene carbonate compounds are preferable.

(Surface-crosslinking agent solution)

The amount of the surface-crosslinking agent added is preferably 5 mass% or less, more preferably 3 mass% or less, still more preferably 2 mass% or less, still even more preferably 1 mass% or less, and particularly preferably 0.1 mass% or less with respect to the solid content of the water-absorbing resin. The lower limit is preferably 0.001 mass% or more, and more preferably 0.01 mass% or more.

The surface-crosslinking agent may be added in its original form, but from the viewpoint of ease of addition, the surface-crosslinking agent is preferably added in a form of a solution in which the surface-crosslinking agent is dissolved in water or an organic solvent. The concentration of the surface-crosslinking agent solution is preferably 1 mass% or more, and more preferably 2 mass% or more. The total amount of the solvent selected from water and an organic solvent is preferably 0 to 10 mass%, more preferably 0.1 mass% to 8 mass%, and still more preferably 0.5 mass% to 5 mass% with respect to the solid content of the water-absorbing resin. In the case of using water and an organic solvent in combination, water is preferably the main component.

In a case where the surface-crosslinking agent is added as an aqueous solution, the concentration in the aqueous solution can be adjusted according to the moisture content of the water-absorbing resin powder at the time of contact with the surface-crosslinking agent, and therefore such a case is preferable. In the case of a surface-crosslinking agent having too low a solubility in water to form a solution, a hydrophilic solvent such as an alcohol is preferably added appropriately to form a homogeneous solution.

[2-6-2] Heat treatment step

This is a step of heat-treating the water-absorbing resin powder containing the surface-crosslinking agent to obtain a surface-crosslinked dried product.

(Surface crosslinking temperature)

In this step, the water-absorbing resin powder containing the surface-crosslinking agent is heated to 100°C or higher to obtain a water-absorbing agent. The preferred maximum temperature depends on the kind of the surface-crosslinking agent, but the maximum temperature is preferably 100°C to 250°C, more preferably 120°C to 230°C, and still more preferably 150°C to 210°C.

(Time)

The time of the heat treatment step is to be appropriately set from the moisture content of the particulate hydrogel and/or the granular dried product, the kind of the surface-crosslinking agent, the thermal efficiency of the heating device, and the like. As a rough indication, the water-absorbing resin powder is to be heated to a moisture content of 10 mass% or less, and the heating time is in the range of 10 minutes to 120 minutes, and preferably 30 minutes to 90 minutes.

(Heating formation)

The heating device used in the surface crosslinking step is not particularly limited, but from the viewpoint of restraining uneven heating, a heating device is preferably used that has a stirring mechanism in a conductive heat transfer form by solid-solid contact.

[2-7] Cooling step

The present method preferably includes a cooling step of forcibly cooling the dried product or the surface-crosslinked dried product to adjust the temperature to a desired temperature after the drying step or the surface crosslinking step and before the sizing step described below. The cooling step can be performed using a conventionally known cooling means. The cooling temperature can be appropriately adjusted.

[2-8] Sizing step

This is a step of adjusting the particle size of the surface-crosslinked dried product. By this sizing step, a water-absorbing resin powder is obtained in which the particle diameter or the particle size distribution is further actively controlled.
The sizing step preferably includes a cracking step and/or a classifying step. The cracking step is a step of cracking the granular dried product loosely aggregated through the surface treatment step with a cracking machine to adjust the particle diameter. The classifying step is a step of removing coarse particles and fine powder from the surface-crosslinked granular dried product or the cracked product of the dried product using a classifier.
The cracking machine is not particularly limited, and examples of the cracking machine include vibrating mills, roll granulators, knuckle pulverizers, roll mills, highspeed rotary pulverizers (pin mills, hammer mills, and screw mills), and cylindrical mixers. The cracking machine is preferably less likely to damage the dried product or the surface-crosslinked dried product, and specific examples of such a cracking machine include a roll granulator (manufactured by MATSUBO Corporation), a granulator (manufactured by Kurimoto, Ltd.), and a roundel mill (manufactured by TOKUJU CORPORATION). As the classifier, a vibrating or swing sieve classifier with a sieve mesh is used.

[2-9] Fine powder recycle step

The term "fine powder recycle step" means a step of supplying the fine powder removed in the classifying step, in the original form of the removed fine powder or after granulating the removed fine powder, to any step. The fine powder recycle step is preferably a step of putting the fine powder or the granulated product of the fine powder into a step before the drying step for reuse. Examples of the step before the drying step include the polymerization step in which the fine power or the granulated product of the fine powder is to be put into a monomer solution prepared in the polymerization step before polymerization or a hydrogel during polymerization, the gel-crushing step of a hydrogel after polymerization, and the drying step of a particulate hydrogel. To these steps, the fine powder may be added as it is, or may be added after being swollen and gelled, or granulated with water. Together with the fine powder, agents may be added such as water, a crosslinking agent, binders other than water (such as a water soluble polymer and a thermoplastic resin), a polymerization initiator, a reducing agent, a chelating agent, and a coloring inhibitor.

A preferred amount of the fine powder recycled is appropriately set according to an intended particle size.

[2-10] Other steps

The production method according to the present invention may further include a pulverizing step, a classification step, a re-moistening step, a granulating step, a transporting step, a storing step, a packaging step, a reserving step, and the like as necessary, in addition to the above-described steps.

(Other additives)

In addition to the surface-crosslinking agent and the gel-fluidizing agent that are optionally used, conventionally known components can be further added as other additives before or after drying, and examples of the components include polymer powders (for example, starch such as tapioca starch acetate), inorganic fine particles, a dust inhibitor, a dried water-absorbing resin (fine powder), a liquid permeability improver, and a reducing agent (for example, sodium sulfite).

[3] Physical properties of water-absorbing resin powder as product

In the water-absorbing resin powder (in particular, a water-absorbing resin powder surface-crosslinked is also referred to as a water-absorbing agent) obtained by the production method according to the present invention, it is desirable that at least one, preferably two or more, more preferably three or more, and still more preferably all of the physical properties listed in the following (3-1) to (3-7) are controlled within a desired range when the water-absorbing resin powder or the water-absorbing agent is used in an absorbent article, particularly a disposable diaper. If all of the following physical properties do not satisfy the following ranges, a sufficient effect of the present invention is not obtained and sufficient performance may be not exhibited particularly in so-called high-concentration disposable diapers in which a large amount of the water-absorbing agent is used in one disposable diaper.

[3-1] CRC (centrifuge retention capacity)

The water-absorbing resin powder (water-absorbing agent) of the present invention usually has a CRC (centrifuge retention capacity) of 5 g/g or more, preferably 15 g/g or more, and more preferably 25 g/g or more. The upper limit is not particularly limited and a higher CRC is preferable, but from the viewpoint of balance with other physical properties, the upper limit is preferably 70 g/g or less, more preferably 50 g/g or less, and still more preferably 40 g/g or less.

A water-absorbing resin powder having a CRC of less than 5 g/g absorbs a small amount of liquid, and thus is not suitable as an absorbent body of an absorbent article such as a disposable diaper. A water-absorbing resin powder having a CRC of more than 70 g/g absorbs a body fluid such as urine or blood at a reduced speed, and therefore is not suitable for use in disposable diapers and the like required a high water absorption speed. The CRC can be controlled by changing the kind and the amount of the internal crosslinking agent, the surface-crosslinking agent, and the like.

[3-2] Moisture content and solid content

The surface-crosslinked water-absorbing resin powder (water-absorbing agent) preferably has a moisture content of more than 0 mass% and 20 mass% or less, more preferably 1 mass% to 15 mass%, still more preferably 2 mass% to 13 mass%, and particularly preferably 2 mass% to 10 mass%. By setting the moisture content within the above range, a water-absorbing agent is obtained that has excellent powder characteristics (for example, fluidity, transportability, and damage resistance). The surface-crosslinked water-absorbing resin powder (water-absorbing agent) preferably has a solid content of 80 mass% or more, more preferably 85 mass% to 99 mass%, still more preferably 87 mass% to 98 mass%, and particularly preferably 90 mass% to 98 mass%.

[3-3] Particle size

The water-absorbing resin powder (water-absorbing agent) preferably has a mass average particle diameter d3 (D50) of 200 um or more, more preferably 200 um to 600 um, still more preferably 250 um to 550 um, and particularly preferably 300 um to 500 um. The proportion of particles having a particle diameter of less than 150 um is preferably 10 mass% or less, more preferably 8 mass% or less, and still more preferably 6 mass% or less. The proportion of water-absorbing resin particles having a particle diameter of more than 850 um is preferably 5 mass% or less, more preferably 3 mass% or less, and still more preferably 1 mass% or less. The water-absorbing agent includes particles having a particle diameter of 150 um to 850 um at a content of preferably 90 mass% or more, more preferably 95 mass% or more, still more preferably 97 mass% or more, and particularly preferably 99 mass% or more. Ideally, the content is 100 mass%. The logarithmic standard deviation ($\sigma\zeta$) of the particle size distribution is preferably 0.20 to 0.50, more preferably 0.25 to 0.40, and still more preferably 0.27 to 0.35.

[3-4] AAP (absorption capacity under load)

The water-absorbing resin powder (water-absorbing agent) preferably has an AAP (absorption capacity under load) of 15 g/g or more, more preferably 20 g/g or more, still more preferably 23 g/g or more, particularly preferably 24 g/g or more, and most preferably 25 g/g or more. The upper limit is not particularly limited, but is preferably 30 g/g or less.
A water-absorbing resin powder having an AAP of less than 15 g/g is not suitable as an absorbent body of an absorbent article such as a disposable diaper because when a pressure is applied to the absorbent body, a large amount of returned liquid (sometimes referred to as "Re-Wet") is generated. The AAP can be controlled by, for example, adjusting the particle size or changing the surface-crosslinking agent.

[3-5] Vortex (water absorption speed)

The water-absorbing resin powder (water-absorbing agent) preferably has a vortex (water absorption speed) of 65 seconds or less, more preferably 60 seconds or less, still more preferably 50 seconds or less, still even more preferably 40 seconds or less, particularly preferably 30 seconds or less, and most preferably 25 seconds or less. The lower limit is not particularly limited, but is preferably 5 seconds or more, and more preferably 10 seconds or more.
A water-absorbing resin powder having a vortex set within the above range can absorb a predetermined amount of liquid in a short time. When the water-absorbing resin powder is used in an absorbent body of an absorbent article such as a disposable diaper, the user feels wetting of the skin for a reduced time and thus is less likely to feel discomfort, and in addition, the amount of leaking liquid can be reduced.

[4] Use of water-absorbing resin powder (water-absorbing agent)

The use of the water-absorbing resin powder (water-absorbing agent) is not particularly limited, but is preferably for an absorbent body of an absorbent article such as a disposable diaper, a sanitary napkin, or an incontinence pad. The water-absorbing resin powder (water-absorbing agent) can be particularly used in an absorbent body of a high-concentration disposable diaper. Furthermore, the water-absorbing agent is excellent in water absorption time and has a controlled particle size distribution, and therefore can be expected to exhibit a remarkable effect when used in the upper layer part of the absorbent body.
As a raw material of the absorbent body, an absorbent material such as a pulp fiber can be used together with the water-absorbing agent. In this case, the content (core concentration) of the water-absorbing agent in the absorbent body is preferably 30 mass% to 100 mass%, more preferably 40 mass% to 100 mass%, still more preferably 50 mass% to 100 mass%, still even more preferably 60 mass% to 100 mass%, particularly preferably 70 mass% to 100 mass%, and most preferably 75 mass% to 95 mass%.
In the case of using the absorbent body in the upper layer part of the absorbent article, the absorbent article can be maintained in a white state with a clean feeling by setting the core concentration in the above range. Furthermore, the absorbent body is excellent in diffusibility of a body fluid and the like such as urine or blood and therefore enables efficient liquid distribution, and thus improvement in the amount of liquid absorbed can be expected.

Examples

The present invention will be described more specifically with reference to the following Experimental Examples, but the present invention is not to be construed as being limited to these descriptions, and experimental examples obtained by appropriately combining the technical means disclosed in Experimental Examples are also included in the scope of the present invention.
The term "water-absorbing resin" described below means a granular dried product obtained through the drying step and a surface-crosslinked granular dried product, or a water-absorbing resin powder and a surface-crosslinked water-absorbing resin powder, and the term "hydrogel" means a crosslinked hydrogel polymer or a crosslinked particulate hydrogel polymer not having undergone the drying step.

In the electric devices (including devices used to measure physical properties of a water-absorbing resin) used in Experimental Examples, a 200-V or 100-V electric power supply was used at 60 Hz, unless otherwise specified. The physical properties of the water-absorbing resins and the hydrogels described below were measured under the conditions of room temperature (20°C to 25°C) and a relative humidity of 50% RH ± 10%, unless otherwise specified.

For convenience, the expression "l" or "L" may be used to mean "liter", and the expression "wt%" may be used to mean "% by mass" or "% by weight". In the case of measuring a trace component, the expression "N.D. (non detected)" may be used to mean a value below the detection limit.

[Methods of measuring physical properties]

(a) CRC (centrifuge retention capacity) of water-absorbing resin powder

The CRC (centrifuge retention capacity) of the water-absorbing resin powder was measured in accordance with the EDANA method (ERT 441.2-02).

(b) Moisture content and solid content of water-absorbing resin powder

The moisture content of the water-absorbing resin powder was measured in accordance with the EDANA method (ERT 430.2-02). In the measurement, the mass of the sample was changed to 1.0 g, the drying temperature was changed to 180°C, and the moisture content and the solid content of the water-absorbing resin powder were calculated from the amount lost from drying for 3 hours.

(c) Mass average particle diameter (d3) of water-absorbing resin powder

The mass average particle diameter (d3) of the water-absorbing resin powder was measured in accordance with the methods described in columns 27 and 28 of U.S. Patent No. 7638570.

(d) Rate of polymerization of hydrogel

Into 1000 g of ion-exchanged water at room temperature, 1.00 g of the sampled hydrogel was put (at this point, the polymerization reaction substantially stopped), and the mixture was stirred at 300 rpm for 2 hours and then filtered to remove an insoluble matter. The amount of the monomer extracted into the filtrate obtained by the above operation was measured using a liquid chromatograph. When the amount of the monomer was regarded as the residual monomer amount m (g), the rate of polymerization of the hydrogel, C (mass%) was determined in accordance with the following (Formula 8). The rate of polymerization is preferably measured immediately after sampling the hydrogel, and in a case where a long time is required from sampling to measurement, operation of stopping polymerization by forced cooling (for example, contact with dry ice, liquid nitrogen, or ice water) is necessary.

$$C \text{ (mass\%)} = 100 \times \{1 - m/(M \times \alpha/100)\} \cdots \text{(Formula 8)}$$

In (Formula 8), M represents the mass (g) of the hydrogel, and $\alpha$ represents the solid content (mass%) of the hydrogel.

(e) Solid content of hydrogel

The moisture content of the hydrogel was measured in accordance with the EDANA method (ERT 430.2-02). In the measurement, the mass of the sample was changed to 2.0 g, the drying temperature was changed to 180°C, and the drying time was changed to 24 hours. Specifically, 2.0 g of the hydrogel was put into an aluminum cup having a bottom surface diameter of 50 mm, and then the total mass of the sample (the hydrogel and the aluminum cup) W1 (g) was accurately weighed. Next, the sample was allowed to stand in an oven set at an atmospheric temperature of 180°C. After a lapse of 24 hours, the sample was taken out from the oven, and the total mass W2 (g) was accurately weighed. When the mass of the hydrogel subjected to the measurement was represented by M (g), the solid content of the hydrogel, $\alpha$ (mass%) was determined in accordance with the following (Formula 10).

$$\alpha \; (\text{mass\%}) \; = \; 100 \; - \; \{(W1 \; - \; W2)/M\} \; \times \; 100 \; \cdots \; (\text{Formula } 10).$$

(f) Particle size of particulate hydrogel

The mass average particle diameter (D50) of the particulate hydrogel was measured in accordance with the method described in WO 2016/204302.

That is, 20 g of the hydrogel (solid content: $\alpha$ (mass%)) having a temperature of 20 to 25°C was added to 1000 g of a 20 mass% aqueous sodium chloride solution containing 0.08 mass% Emal 20C (surfactant, manufactured by Kao Corporation) (hereinafter, referred to as "Emal aqueous solution") to obtain a dispersion, and the dispersion was stirred with a stirrer chip having a length of 50 mm × a diameter of 7 mm at 300 rpm for 16 hours (using an approximately 1.14 L cylindrical polypropylene container having a height of 21 cm and a diameter of 8 cm) .

After completion of the stirring, the dispersion was put into the central part of JIS standard sieves (inner diameter: 20 cm, mesh opening of sieves: 8 mm/4 mm/2 mm/1 mm/0.60 mm/0.30 mm/0.15 mm/0.075 mm) placed on a turntable. The entire hydrogel was washed out on the sieves using 100 g of an Emal aqueous solution, then 6000 g of an Emal aqueous solution was uniformly poured from above at a height of 30 cm using a shower (with 72 holes, flow rate: 6.0 [L/min]) while the sieves were manually rotated (at 20 rpm) so that the water-pouring range (50 cm$^2$) spread over the entire sieves. This operation was repeated four times to classify the hydrogel. The classified hydrogel on the first-stage sieve was drained for about 2 minutes and then weighed. The hydrogel was classified on the second and subsequent-stage sieves by the similar operation and drained, and then the hydrogel remaining on each sieve was weighed. The sieves were appropriately changed according to the particle diameter of the hydrogel. For example, in a case where the hydrogel had a fine particle diameter and clogging occurred on the sieves with a mesh opening of 0.15 mm or 0.075 mm, JIS standard sieves having a larger diameter (diameter: 30 cm, mesh opening: 0.15 mm and 0.075 mm) were used.

The ratio (mass%) in the entire hydrogel was calculated from the mass of the hydrogel remaining on each sieve by the following (Formula 11). The mesh openings of the sieves after draining were determined in accordance with the following (Formula 12), and the particle size distribution of the hydrogel was plotted on a logarithmic probability paper. The particle diameter at which %R on the cumulative sieve of the plot corresponded to 50 mass% was regarded as the mass average particle diameter (D50) of the hydrogel having a solid content of $\alpha$ (mass%).

$$X \; (\%) \; = \; (w/W)*100 \; \cdots \; (\text{Formula } 11)$$

$$R(\alpha) \; (\text{mm}) \; = \; (20/W)^{1/3}*r \; \cdots \; (\text{Formula } 12)$$

Here,

X represents the mass% (%) of the hydrogel remaining on each sieve after classification and draining,
w represents the mass (g) of the hydrogel remaining on each sieve after classification and draining,
W represents the total mass (g) of the hydrogels remaining on the sieves after classification and draining,
$R(\alpha)$ represents the mesh opening (mm) of the sieve in terms of the hydrogel having a solid content of $\alpha$ (mass%), and
r represents the mesh opening (mm) of the sieve with which the hydrogel swollen in the 20 mass% aqueous sodium chloride solution was classified.

(g) Mass average particle diameter (d1) of particulate hydrogel converted to solid content

In accordance with WO 2016/204302, the particle diameter of the particulate hydrogel converted to a solid content (mass average particle diameter as the particulate hydrogel is converted to a solid content in a dried product) d1 was calculated by the following (Formula 14) from the solid content $\alpha$ (mass%) of the particulate hydrogel determined in the above (e) and the mass average particle diameter (D50) of the hydrogel having a solid content of $\alpha$ (mass%) determined in the above (f).

$$\text{SolidD50} \; (d1) \; = \; \text{GelD50} \; \times \; (\alpha/100)^{1/3} \; \cdots \; (\text{Formula } 14)$$

Here,

GelD50 represents the mass average particle diameter (um) of the particulate hydrogel having a solid content of $\alpha$ (mass%),

$\alpha$ represents the solid content (mass%) of the particulate hydrogel, and

SolidD50 (d1) represents the mass average particle diameter (um) of the hydrogel converted to a solid content.

(h) Vortex (water absorption time) of water-absorbing resin powder

The vortex (water absorption time) of the water-absorbing resin powder was measured in accordance with the following procedure. First, 0.02 parts by mass of Food Blue No. 1 (Brilliant Blue), which is a food additive, was added to 1,000 parts by mass of physiological saline (0.9 mass% aqueous sodium chloride solution) prepared in advance, and then the liquid temperature was adjusted to 30°C.

Subsequently, 50 ml of the physiological saline was measured and put into a 100 ml beaker, and while the physiological saline was stirred using a stirrer chip having a length of 40 mm and a diameter of 8 mm at 600 rpm, 2.0 g of the water-absorbing resin powder was put into the beaker. The time from the starting point at which the water-absorbing resin powder was put into the beaker to the point at which the water-absorbing resin powder absorbed the physiological saline to cover the stirrer chip was measured as the vortex (water absorption time) (unit: second).

(i) AAP (absorption capacity under load) of water-absorbing resin powder

The AAP (absorption capacity under load) of the water-absorbing resin powder was measured in accordance with the EDANA method (ERT 442.2-02). In the measurement, the load condition was changed to 4.83 kPa (0.7 psi).

(j) Average retention time

The average retention time (second) of the hydrogel in the gel-crushing device was determined in accordance with the following method.

First, a hydrogel colored in blue was separately prepared by performing polymerization in the same manner as in Production Example 1 described below except that Blue No. 1 in an amount of 1 mass% (with respect to the monomer solution) was added to the monomer solution. Next, an uncolored hydrogel was put into the gel-crushing device at a predetermined input speed to stabilize the operation of the gel-crushing device. The hydrogel colored in blue was put into the gel-crushing device instead of the hydrogel for $2 \pm 5$ seconds without changing the input speed of the hydrogel, and then the uncolored hydrogel was continuously put into the gel-crushing device at the same speed to continue the gel-crushing. The time of starting input of the blue hydrogel was set to 0 seconds, and the particulate hydrogel discharged from the gel-crushing device was sampled every 5 seconds.

Into a polyethylene zipper bag size A (manufactured by SEISANNIPPONSHA LTD., length: 70 mm, width: 50 mm, thickness: 0.04 mm), 15 g of the sampled hydrogel was put, and then a weight (15 kg) having a square bottom surface of 80 mm in length and width was placed on the bag for 5 seconds to mold the hydrogel into a sheet form. At this time, care was taken to prevent air from being caught in the bag. Subsequently, the b value of the obtained sheet-formed sample was measured using a spectroscopic color-difference meter SZ-$\Sigma$80COLOR MEASURING SYSTEM (manufactured by NIPPON DENSHOKU INDUSTRIES CO., LTD.) under the measurement conditions of reflection measurement/standard white plate No. 1/30$\varphi$ projector pipe. One sample was measured five times, and an average of the measured values was calculated. In each measurement, the weight was placed to adjust the form of the sample. For the hydrogels sampled every 5 seconds, the b value was calculated in the same manner. A hydrogel having a stronger blueness has a smaller b value (less than 0 and having a large absolute value). The time of sampling the hydrogel having the strongest blueness (the smallest b value) was taken as the average retention time (min). In a case where the gel-crushing step was performed a plurality of times, the average retention time was measured every time, and the total of the measured times was taken as the average retention time (min).

[Production Example 1]

An aqueous monomer solution was prepared that includes 300 parts by mass of acrylic acid, 100 parts by mass of a 48 mass% aqueous sodium hydroxide solution, 0.61 parts by mass of polyethylene glycol diacrylate (average n number: 9), 16.4 parts by mass of a 0.1 mass% aqueous trisodium diethylenetriaminepentaacetate solution, and 273.2 parts by mass of deionized water.

Next, the aqueous monomer solution adjusted to a temperature of 38°C was continuously supplied with a quantitative pump, and then 150.6 parts by mass of a 48 mass% aqueous sodium hydroxide solution was further continuously mixed by line mixing. At this time, the liquid temperature of the aqueous monomer solution was raised to 87°C by the heat of neutralization.

Furthermore, 14.6 parts by mass of a 4 mass% aqueous sodium persulfate solution was continuously mixed by line mixing, and then continuously supplied to a continuous polymerizer having a planar polymerization belt provided with weirs at both ends so as to have a thickness of 10 mm. Thereafter, polymerization was continuously performed for a polymerization time of 3 minutes to obtain a belt-formed (sheet-formed) crosslinked hydrogel polymer (1a). The obtained belt-formed hydrogel (1a) was cut according to the treatment speed and the input interval in the gel-crushing device described below to obtain a strip-formed hydrogel (1b) having a width of several cm. For example, in a case where the treatment speed of the gel-crushing device is set to 0.64 kg/min and the strip-formed hydrogel is put into the gel-crushing device at intervals of 2.5 seconds, the mass of one strip-formed hydrogel is set to 0.0267 kg. The strip-formed hydrogel (1b) had a rate of polymerization of 98.5 mass% and a solid content of 53 mass%.

[Experimental Example 1]

<Gel-crushing>

The strip-formed hydrogel (1b) was crushed using, as a gel-crushing device, a biaxial kneader provided with a main body (barrel) incorporating two rotation axes that rotate in the same direction. Each rotation axis is provided with a disk having a circular plate shape that mainly serves as a crusher. The barrel had a jacket structure, and had a gas inlet for introduction of water vapor through the jacket into the main body.

First, a heat medium at 60°C was circulated in the jacket, and the inside of the main body (barrel) was maintained at a temperature of 60°C. Thereafter, the rotation speed was set to 40 rpm, and the strip-formed hydrogel (1b) heated to 60°C was put into the input port of the biaxial kneader at a speed of 0.64 kg/min. At this time, simultaneously with the hydrogel (1b), water at 60°C was supplied from the input port, and water vapor at 0.6 MPa was further supplied from the gas inlet. The amount of the water at 60°C supplied was 11.8 mass% with respect to the solid content of the strip-formed hydrogel (1b). The input amount of the water vapor at 0.6 MPa was 9.7 mass% with respect to the solid content of the strip-formed hydrogel (1b). The disks used for gel-crushing had a diameter D described in Table 1, and the minimum clearance between the barrel and the disk was 6 mm (150 of the disk diameter D). Table 1 shows the gel-crushing conditions. Table 2 shows the properties of a particulate hydrogel (A) obtained by crushing. The GGE at the time of gel-crushing was 19 J/g.

<Drying/surface treatment>

The obtained particulate hydrogel (A) was dried using a hot-gas dryer. This dryer is provided with a basket (size of bottom surface: 30 cm × 20 cm) made of a wire mesh having a mesh opening of 1.2 mm. On the bottom surface of the basket, 500 g of the particulate hydrogel (A) was spread so as to be substantially uniform, and a hot gas at 190°C was blown from below for 30 minutes to obtain a dried product. Thereafter, the dried product cooled was supplied to a roll mill, pulverized, and classified using JIS standard sieves having mesh openings of 850 um and 150 um. A component that passed through the 850 um sieve and did not pass through the 150 um sieve was collected to obtain a water-absorbing resin powder (AP1).

Next, 100 parts by mass of the water-absorbing resin powder (AP1) was sprayed and mixed with a surface-crosslinking agent solution including 0.025 parts by mass of ethylene glycol diglycidyl ether, 0.3 parts by mass of ethylene carbonate, 0.5 parts by mass of propylene glycol, and 2.0 parts by mass of deionized water. The resulting mixture was heat-treated at 200°C for 35 minutes to obtain a surface-crosslinked water-absorbing resin powder (AP2). Table 3 shows the physical properties of the surface-crosslinked water-absorbing resin powder (AP2).

[Experimental Example 2]

A particulate hydrogel (B) was obtained in the same manner as in Experimental Example 1 except that the minimum clearance between the barrel and the disk was changed to 2 mm (4.160 of the disk diameter D). The disk arrangement pattern was the same as in Experimental Example 1, but the GGE at the time of gel-crushing was 41 J/g. Table 1 shows the gel-crushing conditions. Table 2 shows the properties of the particulate hydrogel (B) obtained by crushing.

The particulate hydrogel (B) was dried/surface-treated in the same manner as in Experimental Example 1 to obtain a water-absorbing resin powder (BP1) and a surface-crosslinked water-absorbing resin powder (BP2). Table 3 shows the physical properties.

[Experimental Example 3]

A particulate hydrogel (C) was obtained in the same manner as in Experimental Example 1 except that the heating temperature of the strip-formed hydrogel (1b) (temperature T1 of the gel put into the input port of the gel-crushing device) was changed to 80°C, a 10 mass% aqueous lauryl dimethylaminoacetic acid betaine solution was supplied simultaneously with the strip-formed hydrogel (1b) from the input port, the temperature of the supplied water was changed to 90°C, the rotation speed of the rotation axis was changed to 100 rpm, the temperature of the heat medium in the jacket was changed to 105°C (that is, the temperature inside the main body was maintained at 105°C), and the minimum clearance between the barrel and the disk was changed to 1 mm (20 of the disk diameter D). The amount of the lauryl dimethylaminoacetic acid betaine supplied in terms of a solid content was 0.15 mass% with respect to the solid content of the strip-formed hydrogel (1b). Table 1 shows the gel-crushing conditions. Table 2 shows the properties of the particulate hydrogel (C) obtained by crushing. The GGE at the time of gel-crushing was 125 J/g.

The particulate hydrogel (C) was dried/surface-treated in the same manner as in Experimental Example 1 to obtain a water-absorbing resin powder (CP1) and a surface-crosslinked water-absorbing resin powder (CP2). Table 3 shows the physical properties.

[Experimental Example 4]

A particulate hydrogel (D) was obtained in the same manner as in Experimental Example 1 except that the heating temperature of the strip-formed hydrogel (1b) (temperature T1 of the gel put into the input port of the gel-crushing device) was changed to 70°C, no water and no water vapor were supplied, the rotation speed of the rotation axis was changed to 100 rpm, the temperature of the heat medium in the jacket was changed to 80°C (that is, the temperature inside the main body was maintained at 80°C), and the minimum clearance between the barrel and the disk was changed to 1 mm (20 of the disk diameter D). Table 1 shows the gel-crushing conditions. Table 2 shows the properties of the particulate hydrogel (D) obtained by crushing. The GGE at the time of gel-crushing was 54 J/g.

The particulate hydrogel (D) was dried/surface-treated in the same manner as in Experimental Example 1 to obtain a water-absorbing resin powder (DP1) and a surface-crosslinked water-absorbing resin powder (DP2). Table 3 shows the physical properties.

[Experimental Example 5]

A particulate hydrogel (E) was obtained in the same manner as in Experimental Example 1 except that the heating temperature of the strip-formed hydrogel (1b) (temperature T1 of the gel put into the input port of the gel-crushing device) was changed to 80°C, the speed of putting the strip-formed hydrogel (1b) was changed to 0.45 kg/min, the temperature of the supplied water was changed to 90°C, the minimum clearance between the barrel and the disk was changed to 1 mm (20 of the disk diameter D), the rotation speed of the rotation axis was changed to 70 rpm, and the temperature of the heat medium in the jacket was changed to 105°C. Table 1 shows the gel-crushing conditions. Table 2 shows the properties of the particulate hydrogel (E) obtained by crushing. The GGE at the time of gel-crushing was 10 J/g.

The particulate hydrogel (E) was dried in the same manner as in Experimental Example 1. As a result, the coarse gel of about 10 mm present in the particulate hydrogel (E) was insufficiently dried, and the resulting dried product was inadequate to be pulverized with a roll mill in the subsequent step.

[Experimental Example 6]

The same operation as in Experimental Example 4 was performed except that the temperature of the strip-formed hydrogel (1b) was changed to room temperature (20°C), no water and no water vapor were supplied, and the temperature of the heat medium in the jacket was changed to room temperature (20°C) (that is, the temperature inside the main body was maintained at room temperature (20°C)). As a result, the gel-crushing device stopped due to overload. After the stop, the barrel was opened to confirm the contents, and it was found that the hydrogel (F) was united into a rice cake form and inadequate to be subjected to the subsequent production process.

[Experimental Example 7]

A particulate hydrogel (G) was obtained in the same manner as in Experimental Example 4 except that water at 90°C was supplied simultaneously with the strip-formed hydrogel (1b) from the input port. The disk pattern was the same as in Experimental Example 4, but the GGE at the time of gel-crushing was 48 J/g. Table 1 shows the gel-crushing conditions. Table 2 shows the properties of the particulate hydrogel (G) obtained by crushing.

The particulate hydrogel (G) was dried/surface-treated in the same manner as in Experimental Example 1 to obtain a water-absorbing resin powder (GP1) and a surface-crosslinked water-absorbing resin powder (GP2). Table 3 shows the physical properties.

[Experimental Example 8]

A particulate hydrogel (H) was obtained in the same manner as in Experimental Example 3 except that water vapor at 0.6 MPa was not supplied. The disk pattern was the same as in Experimental Example 3, but the GGE at the time of gel-crushing was 157 J/g. Table 1 shows the gel-crushing conditions. Table 2 shows the properties of the particulate hydrogel (H) obtained by crushing.
The particulate hydrogel (H) was dried/surface-treated in the same manner as in Experimental Example 1 to obtain a water-absorbing resin powder (HP1) and a surface-crosslinked water-absorbing resin powder (HP2). Table 3 shows the physical properties.

[Experimental Example 9]

A particulate hydrogel (I) was obtained in the same manner as in Experimental Example 3 except that the temperature of the heat medium in the jacket was changed to 60°C (that is, the temperature inside the main body was maintained at 60°C). The disk pattern was the same as in Experimental Example 3, but the GGE at the time of gel-crushing was 135 J/g. Table 1 shows the gel-crushing conditions. Table 2 shows the properties of the particulate hydrogel (I) obtained by crushing.
The particulate hydrogel (I) was dried/surface-treated in the same manner as in Experimental Example 1 to obtain a water-absorbing resin powder (IP1) and a surface-crosslinked water-absorbing resin powder (IP2). Table 3 shows the physical properties.

[Experimental Example 10]

A particulate hydrogel (J) was obtained in the same manner as in Experimental Example 2 except that a 10 mass% aqueous solution of polyethylene glycol 2000 (manufactured by Tokyo Chemical Industry Co., Ltd., weight average molecular weight: 2,000) was supplied simultaneously with the strip-formed hydrogel (1b) from the input port. The amount of the polyethylene glycol 2000 supplied in terms of a solid content was 0.8 mass% with respect to the solid content of the strip-formed hydrogel (1b). Table 1 shows the gel-crushing conditions. Table 2 shows the properties of the particulate hydrogel (J) obtained by crushing. The GGE at the time of gel-crushing was 38 J/g.
The particulate hydrogel (J) was dried/surface-treated in the same manner as in Experimental Example 1 to obtain a water-absorbing resin powder (JP1) and a surface-crosslinked water-absorbing resin powder (JP2). Table 3 shows the physical properties.

[Experimental Example 11]

A particulate hydrogel (K) was obtained in the same manner as in Experimental Example 2 except that a 10 mass% aqueous solution of KF-354L (manufactured by Shin-Etsu Chemical Co., Ltd., side-chain polyether-modified polysiloxane) was supplied simultaneously with the strip-formed hydrogel (1b) from the input port. The amount of the KF-354L supplied in terms of a solid content was 0.05 mass% with respect to the solid content of the strip-formed hydrogel (1b). Table 1 shows the gel-crushing conditions. Table 2 shows the properties of the particulate hydrogel (K) obtained by crushing. The GGE at the time of gel-crushing was 36 J/g.
The particulate hydrogel (K) was dried/surface-treated in the same manner as in Experimental Example 1 to obtain a water-absorbing resin powder (KP1) and a surface-crosslinked water-absorbing resin powder (KP2). Table 3 shows the physical properties.

[Experimental Example 12]

A particulate hydrogel (L) was obtained in the same manner as in Experimental Example 7 except that the heating temperature of the strip-formed hydrogel (1b) (temperature T1 of the gel put into the input port of the gel-crushing device) was changed to 80°C, the speed of treating the strip-formed hydrogel (1b) was changed to 0.36 kg/min, a powder of tapioca starch acetate BK-V (manufactured by Tokai Denpun Co., Ltd.) was supplied simultaneously with the strip-formed hydrogel (1b) from the input port, the rotation speed of the rotation axis was set to 50 rpm, the amount of the water supplied was set to 52.2 mass% with respect to the solid content of the strip-formed hydrogel (1b), and the temperature of the heat medium in the jacket was changed to 90°C (that is, the temperature inside the main body was maintained at 90°C). The amount of the tapioca starch acetate BK-V supplied in terms of a solid content was 25 mass% with respect to the solid content of the strip-formed hydrogel (1b). Table 1 shows the gel-crushing conditions. Table 2 shows the properties of the particulate hydrogel (L) obtained by crushing. The GGE at the time of gel-crushing was 30 J/g.
The particulate hydrogel (L) was dried/surface-treated in the same manner as in Experimental Example 1 to obtain a water-absorbing resin powder (LP1) and a surface-crosslinked water-absorbing resin powder (LP2). Table 3 shows the physical properties.

In Table 1, the gel temperature T1 refers to the gel temperature at the input port of the gel-crushing device, and the gel temperature T2 refers to the gel temperature at the discharge port of the gel-crushing device. In Table 2, d1 refers to the mass average particle diameter of the particulate hydrogel converted to a solid content. In Table 3, d3 refers to the mass average particle diameter of the water-absorbing resin powder. In all Examples, the crosslinked hydrogel polymer was continuously crushed by the crusher at 50°C or higher. In all Examples, the inside of the main body was heated to 50°C or higher before input of the hydrogel.

[Table 1]

(Table 1) Conditions at the time of gel-crushing

| | Gel temperature | | Geltemperature-retaining means at the time of gel-crushing | | | Disk diameter D (mm) | Clearance (with disk) (%) | Rotation speed (rpm) |
|---|---|---|---|---|---|---|---|---|
| | T1 (°C) | T2 (°C) | Heat medium in jacket (°C) | Water (°C) | Water vapor (MPa) | | | |
| Experimental Example 1 | 60 | 85 | 60 | 60 | 0.6 | 40 | 15 | 40 |
| Experimental Example 2 | 60 | 92 | 60 | 60 | 0.6 | 48 | 4.16 | 40 |
| Experimental Example 3 | 80 | 109 | 105 | 90 | 0.6 | 50 | 2 | 100 |
| Experimental Example 4 | 70 | 81 | 80 | - | - | 50 | 2 | 100 |
| Experimental Example 5 | 80 | 98 | 105 | 90 | 0.6 | 50 | 2 | 70 |
| Experimental Example 6 | 20 | - | 20 | - | - | 50 | 2 | 100 |
| Experimental Example 7 | 70 | 88 | 80 | 90 | - | 50 | 2 | 100 |
| Experimental Example 8 | 80 | 94 | 105 | 90 | - | 50 | 2 | 100 |
| Experimental Example 9 | 80 | 90 | 60 | 90 | 0.6 | 50 | 2 | 100 |
| Experimental Example 10 | 60 | 93 | 60 | 60 | 0.6 | 48 | 4.16 | 40 |
| Experimental Example 11 | 60 | 91 | 60 | 60 | 0.6 | 48 | 4.16 | 40 |
| Experimental Example 12 | 80 | 95 | 90 | 90 | - | 50 | 2 | 50 |

[Table 2]

(Table 2) Properties of particulate hydrogels

|  | Particulate hydrogel | d1 (μm) | Solid content (wt%) | Rate of polymerization (wt%) |
|---|---|---|---|---|
| Experimental Example 1 | A | 2742 | 47.2 | 98.5 |
| Experimental Example 2 | B | 800 | 47.1 | 98.7 |
| Experimental Example 3 | C | 141 | 48.2 | 98.5 |
| Experimental Example 4 | D | 597 | 49.2 | 98.6 |
| Experimental Example 5 | E | 5000 | 47.9 | 98.5 |
| Experimental Example 6 | F | - | - | - |
| Experimental Example 7 | G | 613 | 48.0 | 98.3 |
| Experimental Example 8 | H | 152 | 50.2 | 98.8 |
| Experimental Example 9 | I | 131 | 47.1 | 98.2 |
| Experimental Example 10 | J | 821 | 48.0 | 98.4 |
| Experimental Example 11 | K | 835 | 48.8 | 98.7 |
| Experimental Example 12 | L | 490 | 420 | 98.2 |

[Table 3]

(Table 3) Properties of surface-crosslinked water-absorbing resin powder

|  | Particulate hydrogel | Surface-crosslinked water-absorbing resin powder | | | | | |
|---|---|---|---|---|---|---|---|
|  |  | Kind | d3 (μm) | Solid content (wt%) | CRC (g/g) | AAP (g/g) | Vortex (sec) |
| Experimental Example 1 | A | AP2 | 350 | 978 | 34 | 23 | 62 |
| Experimental Example 2 | B | BP2 | 350 | 978 | 35 | 25 | 45 |
| Experimental Example 3 | C | CP2 | 349 | 97.7 | 33 | 25 | 23 |
| Experimental Example 4 | D | DP2 | 351 | 978 | 35 | 24 | 43 |
| Experimental Example 5 | E | - | - | - | - | - | - |
| Experimental Example 6 | F | - | - | - | - | - | - |
| Experimental Example 7 | G | GP2 | 350 | 979 | 35 | 25 | 39 |
| Experimental Example 8 | H | HP2 | 350 | 978 | 34 | 24 | 35 |
| Experimental Example 9 | I | IP2 | 350 | 978 | 34 | 25 | 28 |
| Experimental Example 10 | J | JP2 | 348 | 979 | 34 | 23 | 38 |
| Experimental Example 11 | K | KP2 | 348 | 979 | 34 | 23 | 37 |

(continued)

| | Particulate hydrogel | Surface-crosslinked water-absorbing resin powder | | | | | |
|---|---|---|---|---|---|---|---|
| | | Kind | d3 ($\mu$m) | Solid content (wt%) | CRC (g/g) | AAP (g/g) | Vortex (sec) |
| Experimental Example 12 | L | LP2 | 415 | 97.1 | 26 | 18 | 48 |

In the production method according to the present invention, the crosslinked hydrogel polymer obtained in the polymerization step was crushed using a kneader having a plurality of axes to obtain a gel-crushed product that can be subjected to the subsequent step. The obtained water-absorbing resin powder also exhibited an excellent absorption rate (Experimental Examples 1 to 4 and 7 to 12) .

From a comparison between Experimental Examples 1 and 2, it has been confirmed that reducing the clearance between the barrel and the disk reduces the particle diameter of the particulate hydrogel and improves the water absorption speed of the water-absorbing resin powder.

From a comparison between Experimental Examples 4 and 7, it has been confirmed that if gel-crushing is performed while the inside of the main body is supplied with water, the water absorption speed of the water-absorbing resin powder is improved although the particle diameter of the particulate hydrogel is increased.

From a comparison among Experimental Examples 3, 8, and 9, it has been confirmed that if gel-crushing is performed at a high temperature (100°C or higher), while the inside of the main body is supplied with water vapor, the water absorption speed of the water-absorbing resin powder is improved.

From a comparison among Experimental Examples 2, 10, and 11, it has been confirmed that if a gel-fluidizing agent and the hydrogel are simultaneously put into the gel-crushing device to perform gel-crushing, the water absorption speed of the water-absorbing resin powder is improved although the particle diameter of the particulate hydrogel is increased.

Industrial Applicability

The water-absorbing resin powder obtained by the present invention is suitable for use in an absorbent body of a hygiene product such as a disposable diaper.

The present application is based on the Japanese patent application No. 2020-161054 filed on September 25, 2020. The disclosed contents thereof are referred to and incorporated here as a whole.

Reference Signs List

200 Gel-crusher
204 Input port
206 Rotation axis
208 Main body (barrel)
210 Discharge port
212 Crushing means
214 Drive device
216 Gas inlet

**Claims**

1. A method for producing a water-absorbing resin powder, the method comprising:

a polymerization step of polymerizing an aqueous monomer solution to obtain a crosslinked hydrogel polymer;
a gel-crushing step of crushing the crosslinked hydrogel polymer after the polymerization step using a gel-crushing device to obtain a crosslinked particulate hydrogel polymer; and
a drying step of drying the crosslinked particulate hydrogel polymer to obtain a dried product, wherein
the gel-crushing device includes an input port, a discharge port, and a main body incorporating a plurality of rotation axes, the plurality of rotation axes each including a crusher,

in the gel-crushing step, the crosslinked hydrogel polymer is continuously put into the gel-crushing device from the input port, the crosslinked hydrogel polymer is continuously crushed by the crusher at 50°C or higher, and the crosslinked particulate hydrogel polymer is continuously taken out from the discharge port,

the crosslinked hydrogel polymer to be put into the input port has a rate of polymerization of 90 mass% or more, and

the crosslinked particulate hydrogel polymer discharged from the discharge port has a mass average particle diameter d1 of 3 mm or less as converted to a solid content.

2. The method according to claim 1, wherein the crosslinked hydrogel polymer to be put into the input port has a gel temperature T1 of 50°C or higher.

3. The method according to claim 1 or 2, wherein the gel-crushing device is a continuous multiaxial kneader.

4. The method according to any one of claims 1 to 3, wherein the gel-crushing device includes a heating and/or heat-retaining means.

5. The method according to any one of claims 1 to 4, wherein a gel temperature T2 at the discharge port of the gel-crushing device is higher than the gel temperature T1 at the input port.

6. The method according to any one of claims 1 to 5, wherein the aqueous monomer solution contains an acid group-containing unsaturated monomer as a main component.

7. The method according to any one of claims 1 to 6, wherein the gel-crushing device has a minimum clearance C of 0.2 to 200 of a maximum disk diameter D.

8. The method according to any one of claims 1 to 7, wherein the gel temperature T2 at the discharge port of the gel-crushing device is 60 to 140°C.

9. The method according to any one of claims 1 to 8, wherein an inside of the main body is heated to 50°C or higher before the crosslinked hydrogel polymer is put into the gel-crushing device from the input port.

10. The method according to any one of claims 1 to 9, wherein the crosslinked hydrogel polymer obtained after the polymerization step has a sheet form, and the methed further comprises a chopping step of chopping the crosslinked hydrogel polymer having the sheet form before the gel-crushing step.

11. The method according to any one of claims 1 to 10, wherein water and/or water vapor is supplied to the inside of the main body in the gel-crushing step.

12. The method according to claim 11, wherein the water and/or the water vapor supplied to the inside of the main body has a temperature of 50 to 120°C.

13. The method according to claim 11, wherein the water vapor supplied to the inside of the main body has a pressure of 0.2 to 0.8 MPa.

14. The method according to any one of claims 1 to 13, wherein the crosslinked hydrogel polymer to be put into the input port has a solid content of 25 to 75 mass%.

15. The method according to any one of claims 1 to 14, wherein the crosslinked particulate hydrogel polymer discharged from the discharge port has a solid content of 25 to 75 mass%.

16. The method according to any one of claims 1 to 15, wherein the crosslinked hydrogel polymer is a crosslinked polymer containing poly(meth)acrylic acid (salt) as a main component.

FIG.1

FIG.2

# FIG.3

```
                    ┌──────────┐
                    │  START   │
                    └────┬─────┘
                         │  ◄┄┄┄┄┄┄┄┄┄┄┄┄┄┄┄┄┄┄┄┐
                         ▼                       ┊
            ┌────────────────────────┐           ┊
            │  POLYMERIZATION STEP   │           ┊
            └───────────┬────────────┘           ┊  or
                        │  ◄┄┄┄┄┄┄┄┄┄┄┄┄┄┄┄┄┄┄┄┄┄┤
                        ▼                         ┊
            ┌────────────────────────┐            ┊
            │    GEL-CRUSHING STEP   │            ┊ or
            └───────────┬────────────┘            ┊
                        │  ◄┄┄┄┄┄┄┄┄┄┄┄┄┄┄┄┄┄┄┄┄┄┄┤
                        ▼                          ┊
            ┌────────────────────────┐             ┊
            │      DRYING STEP       │             ┊
            └───────────┬────────────┘             ┊
                        ▼                           ┊
            ┌────────────────────────┐              ┊
            │    PULVERIZING STEP    │              ┊
            └───────────┬────────────┘              ┊
                        ▼                            ┊
            ┌────────────────────────┐   ┌────────────────────┐
            │  CLASSIFICATION STEP   ├──►│    FINE POWDER      │
            └───────────┬────────────┘   │  RECYCLING STEP    │
                        ▼                └─────────▲──────────┘
            ┌────────────────────────┐             ┊
            │        SURFACE         │             ┊
            │   CROSSLINKING STEP    │             ┊
            └───────────┬────────────┘             ┊
                        ▼                           ┊
            ┌────────────────────────┐              ┊
            │      SIZING STEP       ├──────────────┘
            └───────────┬────────────┘
                        ▼
            ┌────────────────────────┐
            │      FILLING STEP      │
            └───────────┬────────────┘
                        ▼
                    ┌──────────┐
                    │   END    │
                    └──────────┘
```

## INTERNATIONAL SEARCH REPORT

| International application No. |
|---|
| **PCT/JP2021/034800** |

### A. CLASSIFICATION OF SUBJECT MATTER

*C08F 6/06*(2006.01)i; *C08F 20/00*(2006.01)i; *C08F 20/06*(2006.01)i; *C08J 3/12*(2006.01)i
FI:   C08J3/12 A; C08F20/06; C08F20/00; C08F6/06

According to International Patent Classification (IPC) or to both national classification and IPC

### B. FIELDS SEARCHED

Minimum documentation searched (classification system followed by classification symbols)
C08F6/06; C08F20/00; C08F20/06; C08J3/12

Documentation searched other than minimum documentation to the extent that such documents are included in the fields searched
Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2011/126079 A1 (NIPPON SHOKUBAI CO., LTD) 13 October 2011 (2011-10-13) claims, paragraphs [0091], [0109]-[0112], [0209]-[0326], examples | 1-3, 5, 6, 8, 10-16 |
| Y | | 4, 7, 9 |
| X | WO 2013/002387 A1 (NIPPON SHOKUBAI CO., LTD) 03 January 2013 (2013-01-03) claims, paragraphs [0147], [0148], [0191]-[0326], examples | 1-3 ,5, 6, 8, 10-16 |
| Y | | 4, 7, 9 |
| X | JP 2004-002562 A (NIPPON SHOKUBAI CO LTD) 08 January 2004 (2004-01-08) claims, paragraphs [0023], [0046], [0051]-[0060], examples | 1-3, 6, 14-16 |
| Y | | 4, 7, 9 |
| Y | JP 11-188727 A (NIPPON SHOKUBAI CO LTD) 13 July 1999 (1999-07-13) claims, paragraphs [0048], [0056], [0057], [0079]-[0107], examples | 4, 7, 9 |
| A | JP 2014-524956 A (BASF SE) 25 September 2014 (2014-09-25) claims, examples, entire text | 1-16 |

☐ Further documents are listed in the continuation of Box C.     ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **04 November 2021** | **16 November 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

International application No.

**PCT/JP2021/034800**

| Patent document cited in search report | | | Publication date (day/month/year) | Patent family member(s) | | | Publication date (day/month/year) |
|---|---|---|---|---|---|---|---|
| WO | 2011/126079 | A1 | 13 October 2011 | JP | 2015-083693 | A | |
| | | | | US | 2013/0026412 | A1 | |
| | | | | claims, paragraphs [0220], [0241]-[0245], [0400]-[0536], examples | | | |
| | | | | JP | 2014-098172 | A | |
| | | | | US | 2016/0332141 | A1 | |
| | | | | US | 2012/0258851 | A1 | |
| | | | | WO | 2011/078298 | A1 | |
| | | | | EP | 2557095 | A1 | |
| | | | | EP | 3115382 | A1 | |
| | | | | EP | 2518092 | A1 | |
| | | | | CN | 102822209 | A | |
| | | | | KR | 10-2013-0093477 | A | |
| | | | | KR | 10-2018-0112110 | A | |
| | | | | CN | 104212105 | A | |
| | | | | CN | 102712712 | A | |
| WO | 2013/002387 | A1 | 03 January 2013 | US | 2014/0193641 | A1 | |
| | | | | claims, paragraphs [0257]-[025 9], [0322]-[0477], examples | | | |
| | | | | EP | 2727953 | A1 | |
| | | | | CN | 103619919 | A | |
| | | | | KR | 10-2014-0038998 | A | |
| JP | 2004-002562 | A | 08 January 2004 | (Family: none) | | | |
| JP | 11-188727 | A | 13 July 1999 | US | 6140395 | A | |
| | | | | EP | 0925836 | A1 | |
| | | | | claims, paragraphs [0051], [0059], [0060], [0083]-[0116], examples | | | |
| JP | 2014-524956 | A | 25 September 2014 | WO | 2013/007819 | A1 | |
| | | | | claims, examples | | | |
| | | | | EP | 2731975 | A1 | |
| | | | | CN | 103649130 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 57034101 A
- JP 60055002 A
- WO 2001038402 A
- JP H05112654 A
- US 7638570 B
- US 7265190 B
- US 4893999 A
- US 6241928 B
- US 2005215734 A

- US 6987151 B
- US 6710141 B
- JP 2005035212 A
- WO 2011126079 A
- US 2013026412 A
- US 2016332141 A
- WO 2015129917 A
- WO 2016204302 A
- JP 2020161054 A